(19)

Europäisches Patentamt

European Patent Office

Office européen des brevets

(11) **EP 4 538 740 A1**

(12) **EUROPEAN PATENT APPLICATION**
published in accordance with Art. 153(4) EPC

(43) Date of publication:
**16.04.2025 Bulletin 2025/16**

(21) Application number: **22951598.6**

(22) Date of filing: **22.07.2022**

(51) International Patent Classification (IPC):
**G01S 11/00** (2006.01)

(52) Cooperative Patent Classification (CPC):
**G01S 11/00**

(86) International application number:
**PCT/CN2022/107442**

(87) International publication number:
**WO 2024/016328 (25.01.2024 Gazette 2024/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **LI, Dejian
  Shenzhen, Guangdong 518129 (CN)**

• **GAO, Lei
  Shenzhen, Guangdong 518129 (CN)**
• **CHENG, Xingqing
  Shenzhen, Guangdong 518129 (CN)**
• **WANG, Jian
  Shenzhen, Guangdong 518129 (CN)**

(74) Representative: **Körber, Martin Hans
  Mitscherlich PartmbB
  Patent- und Rechtsanwälte
  Karlstraße 7
  80333 München (DE)**

(54) **SIGNAL TRANSMISSION METHOD AND APPARATUS**

(57)    This application discloses a signal transmission method and an apparatus. The method includes: A first node sends a first preamble on a first channel; and the first node transmits a signal frame on the first channel, where the first preamble indicates a type of the signal frame. Because the first preamble transmitted by the first node on the first channel may indicate a type of a signal frame subsequently transmitted by the first node, different types of signal frames are indicated by the first preamble in different scenarios, so that signal transmission requirements in different scenarios can be met. For example, in a ranging scenario, the first preamble may indicate that the signal frame is a ranging frame.

First node      Second node

S301: The first node sends a first preamble on a first channel, and the second node receives the first preamble on the first channel

S302: The first node and the second node communicate a signal frame on the first channel, where the first preamble indicates a type of the signal frame

FIG. 3

**Description**

## TECHNICAL FIELD

This application relates to the field of wireless communication technologies, and in particular, to a signal transmission method and an apparatus.

## BACKGROUND

With continuous development of global communication technologies, wireless communication technologies have surpassed wired communication technologies in a development speed and application, and present a booming development trend. Smart devices such as smart transportation devices, smart home devices, and robots are gradually entering daily life of people. An intelligent cockpit wireless communication system of a sparklink technology of the sparklink alliance is used as an example. There are a plurality of communication domains in a vehicle, and each communication domain includes one primary node (also referred to as a grant node or a G node) and at least one secondary node (also referred to as a terminal node or a T node). The primary node schedules a time-frequency resource for the secondary node, to implement mutual communication between nodes, radio ranging, and the like.

A preamble in the conventional technology is generally a preamble (preamble) designed for communication, and has a problem of a single design purpose and a limited use scenario.

For example, indication information carried in a preamble of the sparklink basic (sparklink basic, SLB) standard mainly indicates a frame structure of a superframe/radio frame and some communication parameters of an orthogonal frequency division multiplexing (orthogonal frequency division multiplexing, OFDM) symbol, and is mainly used to manage and schedule communication between nodes.

## SUMMARY

This application provides a signal transmission method and an apparatus, to provide a new preamble design, so as to meet signal transmission requirements in different scenarios.

According to a first aspect, a signal transmission method is provided, including: A first node sends a first preamble on a first channel; and the first node transmits a signal frame on the first channel, where the first preamble indicates a type of the signal frame.

In the foregoing solution, the first preamble transmitted by the first node on the first channel may indicate a type of a signal frame subsequently transmitted by the first node. Therefore, different types of signal frames are indicated by the first preamble in different scenarios, so that signal transmission requirements in different scenarios can be met.

For example, in a ranging scenario, the first preamble may indicate that the signal frame is a ranging frame.

For example, in a communication scenario in which a communication hidden node needs to be resolved through request to send (request to send, RTS)/clear to send (clear to send, CTS) frame exchange, the first preamble may indicate that the signal frame is an RTS frame.

In a possible design, the type of the signal frame is a ranging frame.

Correspondingly, that the first node transmits a signal frame on the first channel includes: The first node performs at least one ranging exchange with a second node on the first channel. Each of the at least one ranging exchange includes: The first node sends M first ranging frames and receives N second ranging frames from the second node, and both M and N are positive integers. The first preamble indicates ranging information in the at least one ranging exchange, and the ranging information in the at least one ranging exchange includes the type of the signal frame.

In this design, before the first node and the second node perform ranging exchange, the first node first sends the first preamble, so that the first node and the second node can accurately parse, based on an indication of the first preamble (physical layer information), ranging exchange after the first preamble, thereby improving accuracy and reliability of ranging.

In a possible design, before the first node sends the first preamble on the first channel, the first node may further send information on a second channel. The first channel and the second channel correspond to different frequencies, that is, the first node performs frequency hopping, that is, the first node switches a channel.

The design is based on a "preamble + ranging exchange" compact ranging signal to realize frequency hopping ranging. This can improve the efficiency of frequency hopping ranging.

In a possible design, the first preamble includes a first part and a second part; the first part is a first group of synchronization sequences; and the second part indicates the ranging information in the at least one ranging exchange, and a length of the second part is predefined.

In this design, the first part of the first preamble may be used for automatic gain control (automatic gain control, AGC) adjustment, timing synchronization, and the like between nodes, to ensure that the first preamble has a basic function of the preamble. In addition, the second part of the first preamble indicates the ranging information in the at least one ranging exchange, so that the first node and the second node can perform ranging exchange based on the ranging information indicated in the first preamble, thereby ensuring reliability of ranging exchange.

In a possible design, the ranging information in the at least one ranging exchange further includes one or more of the following:

(1) duration of at least one ranging exchange;
(2) a ranging session identifier corresponding to the at least one ranging exchange;
(3) at least one symbol type of the ranging frame in the at least one ranging exchange, where the at least one symbol type includes one or more of a channel state information reference signal (channel state information reference signal, CSI-RS), a sounding reference signal (sounding reference signal, SRS), a first training signal (first training signal, FTS), a second training signal (second training signal, STS), and/or a positioning reference signal (positioning reference signal, PRS);
(4) the ranging frame in the at least one ranging exchange has a cyclic prefix (cyclic prefix, CP) or does not have a CP;
(5) a CP type of the ranging frame in the at least one ranging exchange is a normal CP or an extended CP;
(6) a ranging exchange mode corresponding to the at least one ranging exchange, where the ranging exchange mode indicates values of M and N in each ranging exchange in the at least one ranging exchange, the M first ranging frames are consecutive ranging frames, and the N second ranging frames are consecutive ranging frames;
(7) a quantity of times of the at least one ranging exchange;
(8) whether the at least one symbol type of the ranging frame is scrambled by using a physical layer security sequence;
(9) whether the ranging exchange is in a multi-user mode;
(10) a quantity of a plurality of users when the ranging exchange is in the multi-user mode;
(11) an address (multicast address) or a number (multicast ID) of a group including the plurality of users when the ranging exchange is in the multi-user mode; and
(12) a quantity of OFDM symbols (ranging symbols) included in each ranging frame.

It should be understood that the foregoing several types of information are merely an example rather than a limitation. In actual application, specific content of the ranging information may be replaced, added, or deleted based on a requirement. This is not limited in this application.

According to the foregoing design, more ranging information is provided, and a format of a ranging PDU can be accurately indicated, thereby further improving accuracy and reliability of the ranging exchange between the first node and the second node.

In a possible design, the first preamble further includes a third part, the third part is a second group of synchronization sequences, and the first group of synchronization sequences is the same as the second group of synchronization sequences.

In such a design, the first preamble and a legacy preamble (for example, a preamble format defined in the SLB standard (Wireless Short Range Communication-Vehicle Air Interface Technical Requirements and Test Methods) released by the sparklink alliance) have a similar part, and therefore have good backward compatibility, so that the first preamble can still be partially parsed by a legacy device (a device supporting the legacy preamble).

In a possible design, the duration of the at least one ranging exchange is indicated by a first field and a second field, the first field indicates a length of a first part of the ranging frame in the at least one ranging exchange, and the second field indicates a length of a second part of the ranging frame in the at least one ranging exchange; and the first field indicates a quantity of symbols, and the second field indicates a quantity of superframes.

Correspondingly, the duration of the at least one ranging exchange is a sum of the length of the first part of the ranging frame and the length of the second part of the ranging frame.

In this design, the first field and the second field may directly reuse two fields defined in the legacy preamble, so that the fields can still be parsed by the legacy device.

In a possible design, the second part further includes first information, where the first information indicates a version of the first preamble, and the version of the first preamble is different from a version of a preamble transmitted by the first node on an initial operating channel.

In this way, a node (for example, the second node) that receives the first preamble may identify the first preamble based on the first information, and distinguish between the first preamble and the legacy preamble.

In a possible design, the third part of the first preamble is used for ranging.

In this way, the second node can obtain more measurement quantities, thereby improving ranging accuracy.

In a possible design, the first preamble includes only the first part and the second part.

In this design, preamble overheads are further reduced while it is ensured that the first preamble has functions such as packet detection, AGC, timing synchronization, and/or frequency synchronization that are required by a ranging application.

In a possible design, the second part further includes second information, and the second information indicates that the first preamble includes only the first part and the second part.

In this way, the second node may accurately parse the first preamble based on the second information.

In a possible design, duration of the at least one ranging exchange is indicated by a first field and a second field, the first field indicates a length of a first part of the ranging frame in the at least one ranging exchange, the second field indicates a length of a second part of the ranging frame in the at least one ranging exchange, the at least one ranging exchange further includes a third part of the ranging frame, and a length of the third part of the ranging frame is a preset length; and the first field indicates a quantity of symbols, and the second field indicates a quantity of superframes.

Correspondingly, the duration of the at least one ranging exchange is a sum of the length of the third part of the ranging frame, the length of the first part of the ranging frame, and the length of the second part of the ranging frame.

In this design, the first field and the second field may directly reuse two fields defined in the legacy preamble, so that the fields can still be parsed by the legacy device.

In a possible design, the second part further includes third information, the third information indicates a version of the first preamble, and the version of the first preamble is the same as a version of a preamble transmitted by the first node on an initial operating channel.

In this case, when performing ranging negotiation on the initial operating channel, the first node and the second node may determine channels on which the first node and the second node subsequently perform ranging exchange, to determine that preambles transmitted on these channels (for example, the first channel) are all first preambles. In this way, the version information in the first preamble may not be distinguished from version information of the legacy preamble, thereby improving compatibility of the first preamble.

In a possible design, M is less than N, and the method further includes: The first node adjusts AGC based on at least one symbol in the second ranging frame.

In this design manner, duration of the second ranging frame sent by the second node is required to be greater than duration of the first ranging frame sent by the first node, so that the first node can adjust the AGC based on a redundant part of the second ranging frame, thereby further improving ranging accuracy and reliability.

According to a second aspect, a signal transmission method is provided, including: A first node sends a first preamble, where the first preamble is used by a second node to perform ranging measurement; and the first node receives a second preamble from the second node, and performs ranging measurement based on the second preamble.

Based on the foregoing solution, preamble-based ranging between nodes can be implemented. In addition to ensuring basic functions such as packet detection, AGC, timing synchronization, and/or frequency synchronization between nodes, overheads of sending a ranging frame for ranging exchange are further reduced.

In a possible design, the first preamble includes a first part, a second part, and a third part; the first part is a first group of synchronization sequences; the second part indicates ranging information in at least one ranging exchange, and a length of the second part is predefined; and the third part is a second group of synchronization sequences, the first group of synchronization sequences is the same as the second group of synchronization sequences, and at least one symbol in the third part is used for ranging. For specific designs of the first part, the second part, and the third part, refer to related descriptions in the first aspect. Details are not described herein again.

In a possible design, the second part indicates that in the ranging information in the at least one ranging exchange, a quantity of times of ranging exchange is 0, that is, there is no ranging frame after the first preamble.

According to a third aspect, a signal transmission method is provided, including: A second node receives a first preamble on a first channel; and the second node transmits a signal frame on the first channel, where the first preamble indicates a type of the signal frame.

In a possible design, the type of the signal frame is a ranging frame.

Correspondingly, that the second node transmits a signal frame on the first channel includes: The second node performs at least one ranging exchange with the first node on the first channel, where each of the at least one ranging exchange includes: The second node receives M first ranging frames from the first node and sends N second ranging frames, where both M and N are positive integers. The first preamble indicates ranging information in the at least one ranging exchange, and the ranging information in the at least one ranging exchange includes the type of the signal frame.

In a possible design, before the second node receives the first preamble on the first channel, the second node further receives information on the second channel, and the first channel and the second channel correspond to different frequencies.

In a possible design, the first preamble includes a first part and a second part; the first part is a first group of synchronization sequences; and the second part indicates the ranging information in the at least one ranging exchange, and a length of the second part is predefined.

In a possible design, the ranging information in the at least one ranging exchange further includes one or more of the following:

(1) duration of at least one ranging exchange;

(2) a ranging session identifier corresponding to the at least one ranging exchange;

(3) at least one symbol type of a ranging frame in the at least one ranging exchange, where the at least one symbol type includes one or more of a CSI-RS, an SRS, an FTS, an STS, and/or a PRS;

(4) the ranging frame in at least one ranging exchange has a CP or does not have a CP;

(5) a CP type of the ranging frame in the at least one ranging exchange is a normal CP or an extended CP;

(6) a ranging exchange mode corresponding to the at least one ranging exchange, where the ranging exchange mode indicates values of M and N in each ranging exchange in the at least one ranging exchange, the M first ranging frames are consecutive ranging frames, and the N second ranging frames are consecutive ranging frames;

(7) a quantity of times of the at least one ranging exchange;

(8) whether the at least one symbol type of the ranging frame is scrambled by using a physical layer security sequence;

(9) whether the ranging exchange is in a multi-user mode;

(10) a quantity of a plurality of users when the ranging exchange is in the multi-user mode;

(11) an address (multicast address) or a number (multicast ID) of a group including the plurality of users when the ranging exchange is in the multi-user mode; and

(12) a quantity of OFDM symbols (ranging symbols) included in each ranging frame.

In a possible design, the first preamble further includes a third part, the third part is a second group of synchronization sequences, and the first group of synchronization sequences is the same as the second group of synchronization sequences.

In a possible design, the duration of the at least one ranging exchange is indicated by a first field and a second field, the first field indicates a length of a first part of the ranging frame in the at least one ranging exchange, and the second field indicates a length of a second part of the ranging frame in the at least one ranging exchange; and the first field indicates a quantity of symbols, and the second field indicates a quantity of superframes.

In a possible design, the duration of the at least one ranging exchange is a sum of the length of the first part of the ranging frame and the length of the second part of the ranging frame.

In a possible design, the second part further includes first information, where the first information indicates a version of the first preamble, and the version of the first preamble is different from a version of a preamble transmitted by the first node on an initial operating channel.

In a possible design, the third part of the first preamble is used for ranging. For example, the second node performs ranging measurement on the third part of the first preamble.

In a possible design, the first preamble includes only the first part and the second part.

In a possible design, the second part further includes second information, and the second information indicates that the first preamble includes only the first part and the second part.

In a possible design, duration of the at least one ranging exchange is indicated by a first field and a second field, the first field indicates a length of a first part of the ranging frame in the at least one ranging exchange, the second field indicates a length of a second part of the ranging frame in the at least one ranging exchange, the at least one ranging exchange further includes a third part of the ranging frame, and a length of the third part of the ranging frame is a preset length; and the first field indicates a quantity of symbols, and the second field indicates a quantity of superframes.

In a possible design, the duration of the at least one ranging exchange is a sum of the length of the third part of the ranging frame, the length of the first part of the ranging frame, and the length of the second part of the ranging frame.

In a possible design, the second part further includes third information, the third information indicates a version of the first preamble, and the version of the first preamble is the same as a version of a preamble transmitted by the first node on an initial operating channel.

In a possible design, M is less than N, and at least one symbol in the second ranging frame is used by the first node to adjust the AGC.

For specific technical effects of the third aspect, refer to technical effects that can be achieved by corresponding designs in the first aspect. Details are not described herein again.

According to a fourth aspect, a signal transmission method is provided, including: A second node receives a first preamble from a first node, and performs ranging measurement based on the first preamble; and the second node sends a second preamble, where the second preamble is used by the first node to perform ranging measurement.

For specific technical effects of the fourth aspect, refer to technical effects that can be achieved by corresponding designs in the second aspect. Details are not described herein again.

According to a fifth aspect, a communication apparatus is provided. The apparatus includes the method configured to implement the first aspect or any possible design of the first aspect.

For example, the apparatus includes:

a transceiver module, configured to send a first preamble on a first channel; and
the transceiver module is further configured to communicate a signal frame on the first channel, where the first preamble indicates a type of the signal frame.

In a possible design, the type of the signal frame is a ranging frame. Correspondingly, when transmitting the signal frame on the first channel, the transceiver module is specifically configured to perform at least one ranging exchange with a second node on the first channel. Each of the at least one ranging exchange includes: sending M first ranging frames and receives N second ranging frames from the second node, and both M and N are positive integers. The first preamble indicates ranging information in the at least one ranging exchange, and the ranging information in the at least one ranging exchange includes the type of the signal frame.

In a possible design, the transceiver module is further configured to: before sending the first preamble on the first channel, send information on a second channel.

In a possible design, the first preamble includes a first part and a second part; the first part is a first group of synchronization sequences; and the second part indicates the ranging information in the at least one ranging exchange, and a length of the second part is predefined.

In a possible design, the ranging information in the at least one ranging exchange further includes one or more of the following:

(1) duration of at least one ranging exchange;
(2) a ranging session identifier corresponding to the at least one ranging exchange;
(3) at least one symbol type of a ranging frame in the at least one ranging exchange, where the at least one symbol type includes one or more of a CSI-RS, an SRS, an FTS, an STS, and/or a PRS;
(4) the ranging frame in at least one ranging exchange has a CP or does not have a CP;
(5) a CP type of the ranging frame in the at least one ranging exchange is a normal CP or an extended CP;
(6) a ranging exchange mode corresponding to the at least one ranging exchange, where the ranging exchange mode indicates values of M and N in each ranging exchange in the at least one ranging exchange, the M first ranging frames are consecutive ranging frames, and the N second ranging frames are consecutive ranging frames;
(7) a quantity of times of the at least one ranging exchange;
(8) whether the at least one symbol type of the ranging frame is scrambled by using a physical layer security sequence;
(9) whether the ranging exchange is in a multi-user mode;
(10) a quantity of a plurality of users when the ranging exchange is in the multi-user mode;
(11) an address (multicast address) or a number (multicast ID) of a group including the plurality of users when the ranging exchange is in the multi-user mode; and
(12) a quantity of OFDM symbols (ranging symbols) included in each ranging frame.

In a possible design, the first preamble further includes a third part, the third part is a second group of synchronization sequences, and the first group of synchronization sequences is the same as the second group of synchronization sequences.

In a possible design, the duration of the at least one ranging exchange is indicated by a first field and a second field, the first field indicates a length of a first part of the ranging frame in the at least one ranging exchange, and the second field indicates a length of a second part of the ranging frame in the at least one ranging exchange; and the first field indicates a quantity of symbols, and the second field indicates a quantity of superframes.

Correspondingly, the duration of the at least one ranging exchange is a sum of the length of the first part of the ranging frame and the length of the second part of the ranging frame.

In a possible design, the second part further includes first information, where the first information indicates a version of the first preamble, and the version of the first preamble is different from a version of a preamble transmitted by the apparatus on an initial operating channel.

In a possible design, the third part of the first preamble is used for ranging.

In a possible design, the first preamble includes only the first part and the second part.

In a possible design, the second part further includes second information, and the second information indicates that the first preamble includes only the first part and the second part.

In a possible design, duration of the at least one ranging exchange is indicated by a first field and a second field, the first field indicates a length of a first part of the ranging frame in the at least one ranging exchange, the second field indicates a length of a second part of the ranging frame in the at least one ranging exchange, the at least one ranging exchange further includes a third part of the ranging frame, and a length of the third part of the ranging frame is a preset length; and the first field indicates a quantity of symbols, and the second field indicates a quantity of superframes.

Correspondingly, the duration of the at least one ranging exchange is a sum of the length of the third part of the ranging frame, the length of the first part of the ranging frame, and the length of the second part of the ranging frame.

In a possible design, the second part further includes third information, the third information indicates a version of the first preamble, and the version of the first preamble is the same as a version of a preamble transmitted by the apparatus on the initial operating channel.

In a possible design, M is less than N, and the apparatus further includes a processing module, configured to adjust AGC based on at least one symbol in the second ranging frame.

According to a sixth aspect, a communication apparatus is provided. The apparatus includes the method configured to implement the second aspect or any possible design of the second aspect.

For example, the apparatus includes:

a transceiver module, configured to: send a first preamble, where the first preamble is used by a second node to perform ranging measurement; and receive a second preamble from the second node; and

a processing module, configured to perform ranging measurement based on the second preamble.

In a possible design, the first preamble includes a first part, a second part, and a third part; the first part is a first group of synchronization sequences; the second part indicates ranging information in at least one ranging exchange, and a length of the second part is predefined; and the third part is a second group of synchronization sequences, the first group of synchronization sequences is the same as the second group of synchronization sequences, and at least one symbol in the third part is used for ranging.

According to a seventh aspect, a communication apparatus is provided. The apparatus includes the method configured to implement the third aspect or any possible design of the third aspect.

For example, the apparatus includes:

a transceiver module, configured to receive a first preamble on a first channel; and
the transceiver module is further configured to communicate a signal frame on the first channel, where the first preamble indicates a type of the signal frame.

In a possible design, the type of the signal frame is a ranging frame. When transmitting the signal frame on the first channel, the transceiver module is specifically configured to perform at least one ranging exchange with the first node on the first channel, where each of the at least one ranging exchange includes: receiving M first ranging frames from the first node and sending N second ranging frames, where both M and N are positive integers. The first preamble indicates ranging information in the at least one ranging exchange, and the ranging information in the at least one ranging exchange includes the type of the signal frame.

In a possible design, the transceiver module is further configured to: before receiving the first preamble on the first channel, receive information on a second channel, where the first channel and the second channel correspond to different frequencies.

In a possible design, the first preamble includes a first part and a second part; the first part is a first group of synchronization sequences; and the second part indicates the ranging information in the at least one ranging exchange, and a length of the second part is predefined.

In a possible design, the ranging information in the at least one ranging exchange further includes one or more of the following:

(1) duration of at least one ranging exchange;
(2) a ranging session identifier corresponding to the at least one ranging exchange;
(3) at least one symbol type of a ranging frame in the at least one ranging exchange, where the at least one symbol type includes one or more of a CSI-RS, an SRS, an FTS, an STS, and/or a PRS;
(4) the ranging frame in at least one ranging exchange has a CP or does not have a CP;
(5) a CP type of the ranging frame in the at least one ranging exchange is a normal CP or an extended CP;
(6) a ranging exchange mode corresponding to the at least one ranging exchange, where the ranging exchange mode indicates values of M and N in each ranging exchange in the at least one ranging exchange, the M first ranging frames are consecutive ranging frames, and the N second ranging frames are consecutive ranging frames;
(7) a quantity of times of the at least one ranging exchange;
(8) whether the at least one symbol type of the ranging frame is scrambled by using a physical layer security sequence;
(9) whether the ranging exchange is in a multi-user mode;
(10) a quantity of a plurality of users when the ranging exchange is in the multi-user mode;
(11) an address (multicast address) or a number (multicast ID) of a group including the plurality of users when the ranging exchange is in the multi-user mode; and
(12) a quantity of OFDM symbols (ranging symbols) included in each ranging frame.

In a possible design, the first preamble further includes a third part, the third part is a second group of synchronization sequences, and the first group of synchronization sequences is the same as the second group of synchronization sequences.

In a possible design, the duration of the at least one ranging exchange is indicated by a first field and a second field, the first field indicates a length of a first part of the ranging frame in the at least one ranging exchange, and the second field indicates a length of a second part of the ranging frame in the at least one ranging exchange; and the first field indicates a quantity of symbols, and the second field indicates a quantity of superframes.

In a possible design, the duration of the at least one ranging exchange is a sum of the length of the first part of the ranging frame and the length of the second part of the ranging frame.

In a possible design, the second part further includes first information, where the first information indicates a version of the first preamble, and the version of the first preamble is different from a version of a preamble transmitted by the first node on an initial operating channel.

In a possible design, the third part of the first preamble is used for ranging. For example, the apparatus further includes a processing module, configured to perform ranging measurement on the third part of the first preamble.

In a possible design, the first preamble includes only the first part and the second part.

In a possible design, the second part further includes second information, and the second information indicates that the first preamble includes only the first part and the second part.

In a possible design, duration of the at least one ranging exchange is indicated by a first field and a second field, the first field indicates a length of a first part of the ranging frame in the at least one ranging exchange, the second field indicates a length of a second part of the ranging frame in the at least one ranging exchange, the at least one ranging exchange further includes a third part of the ranging frame, and a length of the third part of the ranging frame is a preset length; and the first field indicates a quantity of symbols, and the second field indicates a quantity of superframes.

In a possible design, the duration of the at least one ranging exchange is a sum of the length of the third part of the ranging frame, the length of the first part of the ranging frame, and the length of the second part of the ranging frame.

In a possible design, the second part further includes third information, the third information indicates a version of the first preamble, and the version of the first preamble is the same as a version of a preamble transmitted by the first node on an initial operating channel.

In a possible design, M is less than N, and at least one symbol in the second ranging frame is used by the first node to adjust the AGC.

According to an eighth aspect, a communication apparatus is provided. The apparatus includes the method configured to implement the fourth aspect or any possible design of the fourth aspect.

For example, the apparatus includes:

a transceiver module, configured to receive a first preamble from a first node; and a processing module, configured to perform ranging measurement based on the first preamble; and

the transceiver module is further configured to send a second preamble, where the second preamble is used by the first node to perform ranging measurement.

In a possible design, the first preamble includes a first part, a second part, and a third part; the first part is a first group of synchronization sequences; the second part indicates ranging information in at least one ranging exchange, and a length of the second part is predefined; and the third part is a second group of synchronization sequences, the first group of synchronization sequences is the same as the second group of synchronization sequences, and at least one symbol in the third part is used for ranging.

According to a ninth aspect, a communication apparatus is provided, including at least one processor and an interface circuit. The interface circuit is configured to receive a signal from another apparatus other than the apparatus, and transmit the signal to the processor, or send a signal from the processor to another apparatus other than the apparatus. The processor is configured to implement, by using a logic circuit or executing code instructions, the method according to the first aspect or any possible design of the first aspect, the second aspect or any possible design of the second aspect, the third aspect or any possible design of the third aspect, or the fourth aspect or any possible design of the fourth aspect.

According to a tenth aspect, a computer-readable storage medium is provided, where the readable storage medium is configured to store instructions. When the instructions are executed, the method according to the first aspect or any possible design of the first aspect, the second aspect or any possible design of the second aspect, the third aspect or any possible design of the third aspect, or the fourth aspect or any possible design of the fourth aspect is implemented.

According to an eleventh aspect, a computer program product is provided, where the computer program product stores instructions. When the instructions are run on a computer, the computer is enabled to perform the method according to the first aspect or any possible design of the first aspect, the second aspect or any possible design of the second aspect, the third aspect or any possible design of the third aspect, or the fourth aspect or any possible design of the fourth aspect.

According to a twelfth aspect, a signal transmission system is provided, including a first node and a second node.

The first node is configured to perform the method according to the first aspect or any possible design of the first aspect, and the second node is configured to perform the method according to the third aspect or any possible design of the third aspect; or
the first node is configured to perform the method according to the second aspect or any possible design of the second aspect, and the second node is configured to perform the method according to the fourth aspect or any possible design of the fourth aspect.

According to a thirteenth aspect, a terminal is provided, including any communication apparatus according to the fifth aspect to the eighth aspect.

**BRIEF DESCRIPTION OF DRAWINGS**

FIG. 1 is a diagram of a possible application scenario according to an embodiment of this application;

FIG. 2 is a diagram of a format of a legacy preamble;

FIG. 3 is a flowchart of a signal transmission method according to an embodiment of this application;

FIG. 4 is a diagram of a possible format of a first preamble;

FIG. 5 is a comparison diagram of a first preamble and a legacy preamble;

FIG. 6 is a diagram of another possible format of a first preamble;

FIG. 7 is a comparison diagram of a first preamble and a legacy preamble;

FIG. 8 is a diagram of frequency hopping ranging exchange;

FIG. 9 is a diagram of a simulation result of timing and frequency synchronization of a first preamble;

FIG. 10 is a diagram of possible ranging exchange;

FIG. 11 is a flowchart of another ranging method according to an embodiment of this application;

FIG. 12 is a diagram of possible ranging exchange;

FIG. 13 is a diagram of a structure of a communication apparatus according to an embodiment of this application; and

FIG. 14 is a diagram of a structure of another communication apparatus according to an embodiment of this application.

**DESCRIPTION OF EMBODIMENTS**

Technical solutions provided in embodiments of this application may be applied to various wireless communication scenarios, especially a short-range wireless communication scenario, for example, an in-vehicle positioning/ranging/angle measurement/sensing scenario, an indoor positioning/ranging/angle measurement/sensing scenario, or another wide area wireless communication or local area wireless communication scenario. This is not limited in this application. A specific wireless communication technology includes but is not limited to wireless fidelity (Wi-Fi), Bluetooth, Bluetooth low energy (BLE), ultra wide band (ultra wide band, UWB), and sparklink (sparklink).

It may be understood that in embodiments of this application, similar steps are performed to implement positioning, ranging, angle measurement, sensing, and the like. Therefore, any one of the terms may be used to represent "positioning", "ranging", "angle measurement", "sensing", and the like. The following mainly uses "ranging" as an example.

In a wireless communication scenario, a plurality of communication domains may be included in a specific communication area or range. The communication domain is a system including a group of communication nodes having a communication relationship and a communication connection relationship (that is, a communication link) between the communication nodes. One communication domain includes one primary communication node (which may be referred to as a primary node or a G node for short) and at least one secondary communication node (which may be referred to as a secondary node or a T node for short). The primary node is also referred to as a grant node, is responsible for managing a time-frequency resource of the communication domain, and has a function of scheduling a resource for communication, ranging, positioning, or the like between communication nodes in the communication domain.

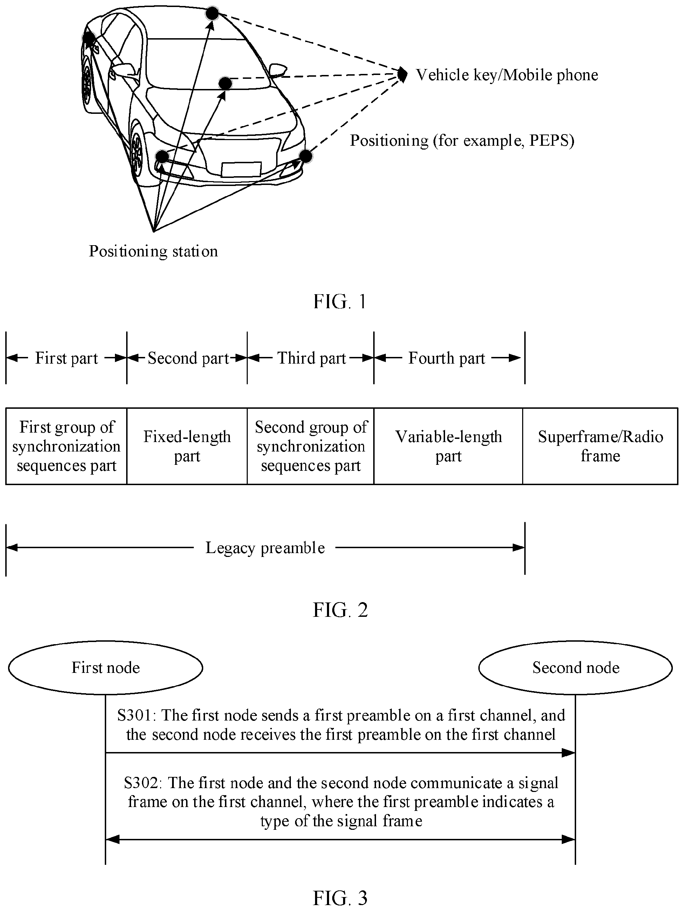

FIG. 1 is a diagram of a possible application scenario according to an embodiment of this application. In an in-vehicle positioning scenario, positioning stations (or referred to as positioning anchors/positioning beacons) are deployed at four vehicle corners outside the vehicle, and at least one positioning station is deployed inside the vehicle (for example, on a rear view mirror inside the vehicle or inside the top of the vehicle). A vehicle key is a target (namely, a positioned device, also referred to as a positioning tag) that needs to be positioned. A specific implementation of the vehicle key may be a conventional vehicle key having a positioning function, or may be a mobile phone/a wearable device having a positioning function, or the like. The positioning station and/or the vehicle key may send and/or receive a ranging frame, and measure the received ranging frame to obtain a corresponding measurement amount. Position information of the vehicle key (for example, a distance between the vehicle key and the vehicle) may be obtained by calculating the measurement amount obtained by the positioning station and/or the vehicle key.

In the scenario shown in FIG. 1, the positioning station, the vehicle key, and the like may form a communication domain. The vehicle key may be a primary node (a G node), and each positioning station is a secondary node (a T node); or one positioning station is a primary node, and another positioning station and the vehicle key are secondary nodes. This is not limited in this application.

It may be understood that the scenario shown in FIG. 1 is merely an example. In actual application, embodiments of this application may be further applied to another wireless communication scenario.

In some available frequency bands of the wireless communication technology, a device needs to perform clear channel assessment before sending a signal (for example, a current spectrum specification in China requires that a "Listen-Before-Talk (Listen-Before-Talk, LBT)" mechanism needs to be used in a frequency band of 5150 MHz to 5350 MHz). As a result, in the SLB standard, clear channel assessment (clear channel assessment, CCA) needs to be performed in this frequency band. When a result of the clear channel assessment is that a channel is idle, a preamble (preamble) signal/information (for ease of description, referred to as a preamble in this specification) is sent. The preamble is used for packet arrival detection, automatic gain control (automatic gain control, AGC), time-frequency synchronization, physical layer (physical layer) protocol data unit (protocol data unit, PDU) format parameter indication, and the like.

A common preamble is mainly designed for communication (for example, service data transmission), has a single design purpose, and is used in a limited scenario, for example, cannot implement a ranging function.

For example, FIG. 2 is a preamble format defined in an SLB standard (Wireless Short Range Communication-Vehicle Air Interface Technical Requirements and Test Methods) released by the sparklink alliance. For ease of description, the preamble format is referred to as a legacy preamble (legacy preamble) in this specification.

The legacy preamble includes four parts: a first part, a second part, a third part, and a fourth part. The meaning of each part is as follows:

The first part: This part carries a first group of synchronization sequences, and includes five second training signal (second training signal, STS) OFDM symbols and five first training signal (first training signal, FTS) OFDM symbols. Therefore, this part may also be referred to as a first group of synchronization sequences part.

The second part: This part includes 14 cyclic prefix (cyclic prefix, CP)-OFDM symbols, transmits physical layer indication information of 131 information bits in total, and has a cyclic redundancy check (cyclic redundancy check, CRC) field. Because the length of the part is fixed, this part may also be referred to as a fixed-length part.

The third part: This part carries a second group of synchronization sequences, where the second group of synchronization sequences is the same as the first group of synchronization sequences; and includes five STS OFDM symbols and five FTS OFDM symbols. Therefore, this part may also be referred to as a second group of synchronization sequences part.

The fourth part: This part indicates information such as downlink control information (downlink control information, DCI). The fourth part sequentially includes a valid data symbol and padding. A length of the padding part in the fourth part is a shortest length that enables a start moment of a superframe to be aligned with a time length granularity of a radio frame (640 Ts), and the length of the padding part may be zero. In different communication processes, a length of the fourth part is variable, or a length of the fourth part may be configured in each communication process. Because the length of the fourth part is variable, the fourth part may also be referred to as a variable-length part.

The fixed-length part includes 14 CP-OFDM symbols, and 131 information bits are transmitted in total, from a least significant bit to a most significant bit. Information included in the fixed-length part is shown in Table 1. It should be noted that Table 1 is merely an example of expression, and specific words and expression manners of a sequence number, a length, and a field meaning are not limited in this application, provided that the solution that can be understood technically. The following tables are also based on this description.

**Table 1**

| Sequence number | Length | Field meaning |
|---|---|---|
| 1 | 2 bits | Version information |
| 2 | 48 bits | 48-bit data link layer identifier (identifier, ID) of a G node |
| 3 | 16 bits | Superframe number, indicating a superframe number of a last superframe that occupies a channel in a previous transmission |
| 4 | 4 bits | Quantity of superframes included in current resource occupation, where a value of this field + 1 is a quantity of superframes included in current transmission |
| 5 | 11 bits | Quantity of information bits transmitted in a variable-length part in bytes, where when a value of this field is 0, a variable-length part is not transmitted |
| 6 | 2 bits | Modulation mode of a variable-length part, where 00 indicates quadrature phase shift keying (quadrature phase shift keying, QPSK), 01 indicates 16-quadrature amplitude modulation (quadrature amplitude modulation, QAM), 10 indicates 64-QAM, and 11 indicates 256-QAM |
| 7 | 8 bits | Quantity of symbols in a variable-length part, where when a value of this field is 0, a variable-length part is not transmitted |
| 8 | 1 bit | System cyclic prefix length indication information, where 0 indicates a normal cyclic prefix, and 1 indicates an extended cyclic prefix |
| 9 | 4 bits | Initial radio frame symbol configuration information, where when a normal cyclic prefix is used, 0 to 13 respectively indicate radio frame structures 0 to 13 in Table 2 of the SLB standard; and when an extended cyclic prefix is used, 0 to 11 respectively indicate radio frame structures 0 to 11 in Table 3 of the SLB standard |
| 10 | 3 bits | Indication information of a start location N_offset (offset) of broadcast information in a superframe, where at a granularity of six radio frames, a number N_offset of the radio frame in which the start location of the broadcast information is located is 6 × a value of this field |
| 11 | 2 bits | Information about a quantity of symbols of a common resource in a control information communication domain, where 00 indicates 4 symbols, 01 indicates 8 symbols, 10 indicates 12 symbols, and 11 is reserved |
| 12 | 1 bit | Broadcast information and system message change indication information, where 0 indicates that the broadcast information and the system message do not change, and 1 indicates that the broadcast information and the system message change |
| 13 | 1 bit | System overhead configuration period indication information, where 0 indicates that a configuration period is one superframe, namely, 48 radio frames, and 1 indicates that the configuration period is a half superframe, namely, 24 radio frames |
| 14 | 4 bits | System overhead symbol quantity information, where when a configuration period is 48 radio frames, a configuration granularity of an overhead resource is 6 symbols, a quantity of overhead symbols is (a value indicated by overhead resource information + 1) × 6, and 4 bits indicate a maximum of 96 overhead symbols; and hen the configuration period is 24 radio frames, the configuration granularity of the overhead resource is 3 symbols, the quantity of overhead symbols is (the value indicated by the overhead resource information + 1) × 3, and 4 bits indicate a maximum of 48 overhead symbols |
| 15 | 24 bits | A cyclic redundancy check sequence is calculated according to a cyclic redundancy check generator polynomial $g_{CRC24B}(D)$ |

It can be learned from Table 1 that the second part of the legacy preamble indicates a frame structure of a superframe/radio frame transmitted when a node communicates with another node, and some communication parameters of an orthogonal frequency division multiplexing (orthogonal frequency-division multiplexing, OFDM) symbol. Therefore, the legacy preamble cannot be directly used in another scenario (for example, a ranging scenario).

Second, two groups of synchronization sequences are designed for the legacy preamble, to reduce a synchronization error (a timing error and a frequency offset error) between nodes that communicate with each other to a very low level. However, in another scenario (for example, the ranging scenario), such high synchronization precision is not required, and the two groups of synchronization signals are redundant.

In conclusion, the legacy preamble is mainly a preamble designed for communication, and is not applicable to the another scenario (for example, the ranging scenario).

In view of this, the technical solutions in embodiments of this application are provided, and a new preamble design is provided, to meet signal transmission requirements in different scenarios (for example, a ranging scenario, and a communication scenario in which a communication hidden node needs to be resolved through request to send (request to send, RTS)/clear to send (clear to send, CTS) frame exchange).

FIG. 3 is a flowchart of a signal transmission method according to an embodiment of this application. In the method, signal transmission between a first node and a second node is used as an example.

S301: The first node sends a first preamble on a first channel, and correspondingly, at least one second node receives the first preamble on the first channel.

For example, when a wireless communication scenario is a short distance wireless communication scenario, the first node may be a G node, or may be a T node. This is not limited in this application. For example, the first node may be the positioning station or the vehicle key in the scenario shown in FIG. 1.

When the wireless communication scenario is a wide area wireless communication scenario, the first node may be a base station or a user equipment (user equipment, UE). This is not limited in this application.

When the wireless communication scenario is a local area wireless communication scenario, the first node may be an access point (access point, AP) or a station (station). This is not limited in this application.

It should be understood that the foregoing several scenarios are merely examples, and actually, there may be another wireless communication scenario.

For ease of description, a short distance wireless communication scenario is mainly used as an example in the text.

The second node is a node that can communicate with the first node. For example, in the scenario shown in FIG. 1, the first node is the positioning station, and the second node is the vehicle key; or the first node is the vehicle key, and the second node is the positioning station.

It may be understood that when there are a plurality of second nodes, the plurality of second nodes may sequentially exchange with the first node in an order (the order may be agreed on in a ranging negotiation phase). An exchange process between each second node and the first node is similar. Therefore, this specification mainly uses one second node as an example for description.

S302: The first node and the at least one second node communicate a signal frame on the first channel, where the first preamble indicates a type of the signal frame.

That the first node and a second node communicate a signal frame on the first channel includes: The first node sends a signal frame, and the second node receives the signal frame; and/or the second node sends the signal frame, and the first node receives the signal frame.

In this embodiment of this application, the type of the signal frame includes but is not limited to any one of a ranging frame, an RTS frame, and/or a CTS frame.

It may be understood that the first node and the second node transmit, after sending of the first preamble ends, the signal frame of the type indicated by the first preamble.

The ranging frame is a signal frame used for ranging measurement between nodes. The specific signal type may be one or more of a channel state information reference signal (channel state information reference signal, CSI-RS), a sounding reference signal (sounding reference signal, SRS), an FTS, an STS, and/or a positioning reference signal (positioning reference signal, PRS), and the like. The CSI-RS, the STS, the FTS, and the STS comply with related definitions in the SLB standard. It should be understood that in actual application, the ranging frame is further replaced with another name. This is not limited in this application. One ranging frame includes one or more OFDM symbols, and the OFDM symbol may be a CP-OFDM symbol that has a CP or an OFDM symbol that does not have a CP. The OFDM in the ranging frame may also be referred to as a ranging OFDM symbol or a ranging symbol.

The RTS frame is a frame used by the G node (for example, the first node) to spread channel reservation duration information. Duration (duration) included in the frame indicates channel occupancy duration that the first node expects to reserve for sending data.

The CTS frame is a frame used by the T node (for example, the second node) to spread channel reservation duration information. Duration (duration) included in the frame indicates channel occupancy duration that the second node expects to reserve.

During specific implementation, a preset field (for example, a first preset field) may be set in the first preamble to indicate different types of signal frames. For example, a length of the first preset field is 4 bits. When a value of the first preset field is 0, it indicates the ranging frame. When the value of the first preset field is 1, it indicates the RTS frame. When the value of the first preset field is 2, it indicates the STS frame. It should be understood that a length of the first preset field and meanings indicated by the values herein are merely examples rather than limitations, and may be actually another design manner.

It may be understood that the foregoing describes three types of signal frames as an example. In actual application, there may be more or fewer types of signal frames, or the signal frames may be replaced with other types. This is not limited in this application.

In the foregoing solution, the first preamble transmitted by the first node on the first channel may indicate a type of a signal frame subsequently transmitted by the first node. In this way, in different scenarios, the first preamble may indicate different types of signal frames, to meet signal transmission requirements in different scenarios. For example, in the ranging scenario, the first preamble indicates the signal frame to be the ranging frame; and in a communication scenario in which a communication hidden node needs to be resolved through RTS/CTS frame exchange, the first preamble indicates the signal frame to be the RTS frame.

The following describes this solution in detail by using an example in which the type of the signal frame is the ranging frame.

It may be understood that, when the type of the signal frame is the ranging frame, the first preamble may be specifically a preamble designed for a ranging scenario in a framework of an OFDM broadband wireless technology (for example, a Wi-Fi technology or a sparklink technology).

In a possible design, that the first node transmits a signal frame on a first channel includes: The first node performs at least one ranging exchange (also referred to as measurement exchange (measurement exchange)) with the second node on the first channel. Each of the at least one ranging exchange includes: The first node sends M first ranging frames and receives N second ranging frames from the second node, and both M and N are positive integers. It should be understood that ranging exchange is a basic measurement process of OFDM frequency hopping ranging, and at least one ranging exchange is required on each channel. The ranging exchange may be performed before a pair of nodes, or may be performed between a plurality of nodes (for example, a vehicle key and a plurality of positioning anchors in a vehicle).

It may be understood that "first" and "second" in the first ranging frame and the second ranging frame are merely used to distinguish whether the ranging frame is sent by the first node or the second node. In actual application, symbol types, lengths, or the like of a ranging frame (that is, the first ranging frame) sent by the first node and a ranging frame (that is, the second ranging frame) sent by the second node may be same or different. For example, a symbol type field in the first preamble is used for indication, or preset, so that a type of an OFDM symbol in the first ranging frame sent by the first node is a CSI-RS symbol, and a type of an OFDM symbol in the second ranging frame sent by the second node is an SRS symbol.

In any one of the at least one ranging exchange, the first node may first send M first ranging frames, and then the second node sends N second ranging frames; or the second node may first send N second ranging frames, and then the first node sends M first ranging frames. This is not limited in this application. For ease of description, an example in which the first node first sends the M first ranging frames is used in this specification.

In the ranging scenario, the first preamble indicates ranging information in the at least one ranging exchange, and the ranging information in the at least one ranging exchange includes the type of the signal frame (for example, the ranging frame) and/or a symbol type in the ranging frame (for example, a CSI-RS and/or an SRS). For example, the first preamble may include one or more fields to indicate the ranging information in the at least one ranging exchange, and the one or more fields include the first preset field.

In this design, before the first node and the second node perform ranging exchange, the first node first sends the first preamble to the second node, so that the first node and the second node may perform ranging exchange based on ranging information indicated in the first preamble, and may accurately parse ranging exchange performed after the first preamble (for example, physical layer indication information in the first preamble) under an indication of the first preamble, including accurate analysis and measurement of a format (for example, a quantity of ranging frames and a quantity of repetition times of ranging exchange) and content (for example, a type of ranging symbol) of ranging exchange. Therefore, accuracy and reliability of ranging are improved.

It may be understood that the first preamble sent by the first node and the at least one ranging exchange transmitted after the first preamble may form a physical layer data unit (physical layer data unit, PDU) used for ranging.

In a possible design, before the first node sends the first preamble on the first channel, the first node sends information on the second channel, and the first channel and the second channel correspond to different frequencies. The frequency may be a center frequency of a channel, a start frequency of the channel, an end frequency of the channel, a frequency range of the channel, or the like. This is not limited in this application.

The first channel and the second channel correspond to different frequencies. It may be understood that the first node performs frequency hopping, that is, the first node switches a channel. For example, the first node switches from a second channel to the first channel, that is, the second channel is a channel before frequency hopping of the first node, and the first channel is a channel after frequency hopping of the first node.

The information sent by the first node on the second channel may be ranging-related information (for example, a ranging frame), or may be other information (for example, a radio frame/a superframe). This is not limited in this application.

Optionally, after switching from the second channel to the first channel, the first node needs to perform CCA on the first channel. If a result of CCA indicates that the first channel is idle, the first node sends the first preamble on the first channel.

According to the foregoing design, in the technical solution of this application, the first preamble may indicate the ranging information in a frequency hopping scenario, including identification of a ranging session and format information (the ranging frame, the ranging symbol, and the like) of ranging exchange. A superframe structure is not required, but a compact ranging signal of "preamble + ranging exchange" may be used to implement frequency hopping ranging. Compared with "a legacy preamble + a superframe", transmission duration is shortened (ranging exchange is generally at hundreds of microseconds, and is less than a millisecond level of the superframe). Efficiency of the frequency hopping ranging scheme is improved.

In a possible design, the first preamble includes a first part and a second part.

The first part of the first preamble is the first group of synchronization sequences. The first part of the first preamble may be used for AGC adjustment of the second node, timing synchronization of the second node, and/or the like. For a specific design, refer to the first part of the legacy preamble shown in FIG. 2. Details are not described herein again.

The second part of the first preamble is different from the second part of the legacy preamble. The second part of the first preamble indicates ranging information in the at least one ranging exchange. A length of the second part is predefined, or a length of the second part is fixed. In other words, physical layer indication information transmitted in the second part of the first preamble is the ranging information in the at least one ranging exchange, and the physical layer indication information transmitted in the second part of the legacy preamble is mainly frame structure information of a superframe/radio frame and some OFDM communication parameters.

According to the foregoing design, the first part of the first preamble may be used for AGC adjustment, timing synchronization, and the like between nodes, to ensure that the first preamble has a basic function of the preamble. In addition, the second part of the first preamble indicates the ranging information in the at least one ranging exchange, so that the first node and the second node can perform ranging exchange based on the ranging information indicated in the first preamble, thereby ensuring reliability of ranging exchange.

In a possible design, in addition to the type of the signal frame (for example, the ranging frame), the ranging information in the at least one ranging exchange further includes one or more of the following:

(1) Duration of at least one ranging exchange.

During specific implementation, the duration may be determined based on lengths of all ranging frames in the at least one ranging exchange, or when duration of each ranging exchange is the same, the duration is determined based on duration of one ranging exchange $\times$ a quantity of ranging exchange times.

(2) A ranging session identifier corresponding to the at least one ranging exchange.

The ranging session identifier is used to distinguish a home session and correlation of channel state information measured during ranging, and identify a ranging session belonging to a user from a plurality of ranging sessions during multi-user ranging. For example, one frequency hopping ranging between the second node and the first node corresponds to one ranging session. When there are a plurality of second nodes, frequency hopping ranging between different second nodes and the first node corresponds to different ranging sessions.

It may be understood that, in one frequency hopping ranging process, ranging exchange performed by the first node and the second node on different channels (for example, the first channel and the second channel) corresponds to a same ranging session, and ranging exchange performed by the first node and the second node in different frequency hopping ranging processes may correspond to different ranging sessions. In addition, ranging exchange performed by the first node and the second node on a same channel at different time may correspond to a same or different ranging sessions (depending on whether the first node and the second node are in a frequency hopping ranging process).

For example, in one frequency hopping ranging process (T1 to T5), in T1 to T2 (indicating a time period from a moment T1 to a moment T2), the first node and the second node perform at least one ranging exchange on the first channel; in T2 to T3 (indicating a time period from the moment T2 to a moment T3), the first node and the second node perform at least one frequency hopping, and perform ranging exchange on a third channel; and in T4 to T5 (indicating a time period from a moment T4 to a moment T5), the first node and the second node return to the first channel, and perform the at least one ranging exchange on the first channel. In this case, ranging exchange in a time period T1 to T2, ranging exchange in a time period T2 to T3, and ranging exchange in a time period T4 to T5 correspond to a same ranging session. $T1 < T2 < T3 \leq T4 < T5$.

(3) At least one symbol type of a ranging frame in the at least one ranging exchange.

For example, the at least one symbol type includes one or more of a CSI-RS, an SRS, an FTS, an STS, and/or a PRS. The G node and the T node may use different symbol types. For example, the G node and the T node respectively use a CSI-RS symbol and an SRS symbol. The G node and the T node may use a same symbol type. For example, both the G node and the T node use an FTS symbol, an STS symbol, or a PRS symbol.

(4) The ranging frame in at least one ranging exchange has a CP or does not have a CP.

(5) A CP type of the ranging frame in the at least one ranging exchange is a normal CP or an extended CP.

(6) Whether the at least one symbol type of the ranging frame is scrambled by using a physical layer security sequence.

For example, the first node and the second node determine an encryption sequence through negotiation in advance, and scramble a subcarrier of a ranging OFDM symbol by using the encryption sequence.

(7) A ranging exchange mode corresponding to the at least one ranging exchange.

The ranging exchange mode indicates values of M and N in each ranging exchange in the at least one ranging exchange, the M first ranging frames are consecutive ranging frames, and the N second ranging frames are consecutive ranging frames.

It may be understood that the M first ranging frames are consecutive ranging frames means that there is no other frame between any two adjacent first ranging frames in the M first ranging frames, and there may be a time interval or may be no time interval between the two adjacent first ranging frames. Similarly, that the N second ranging frames are consecutive ranging frames means that there is no other frame between any two adjacent second ranging frames in the N second ranging frames, and there may be a time interval or may be no time interval between the two adjacent second ranging frames.

In an example, the ranging exchange mode includes a two-way (two-way) 2 message, a two-way 3 message, or the like. The two-way 2 message means M = N = 2 (that is, the first node continuously sends two ranging frames, and the second node continuously sends two ranging frames). The two-way 3 message means M = N = 3 (that is, the first node continuously sends three ranging frames, and the second node continuously sends three ranging frames).

(8) A quantity of times of the at least one ranging exchange.

For example, the quantity of times of the at least one ranging exchange is 2, and with reference to the ranging exchange mode, for example, the two-way 2 message, the at least one ranging exchange process between the first node and the second node on the first channel sequentially includes: The first node continuously sends two ranging frames; the second node continuously sends two ranging frames; the first node continuously sends two ranging frames; and the second node continuously sends two ranging frames.

(9) Whether the ranging exchange is in a multi-user mode.

Multi-user frequency hopping ranging may be that one G node and a plurality of T nodes (one positioning target and a plurality of positioning anchors), for example, one first node and a plurality of second nodes use synchronous frequency hopping ranging. Multi-user ranging exchange is similar to multicast ranging performed in a multicast communication manner. To be specific, a node sends, in a multicast manner, a ranging frame to a multicast member node belonging to a same group, and then other nodes (that is, multicast member nodes) belonging to the same group sequentially send ranging frames of the node.

(10) A quantity of a plurality of users when the ranging exchange is in the multi-user mode, for example, a quantity of second nodes.

(11) An address (multicast address) or a number (multicast ID) of a group including the plurality of users when the ranging exchange is in the multi-user mode.

(12) A quantity of OFDM symbols (ranging symbols) included in each ranging frame.

It may be understood that the foregoing several types of ranging information are merely an example rather than a specific limitation. In actual application, specific content of the ranging information may be replaced, added, or deleted based on a ranging requirement. This is not limited in this application.

During specific implementation, the foregoing different information may be indicated by different fields in the second part of the first preamble (detailed examples are provided in Table 2 or Table 3 below). In addition, each type of information may be specifically indicated by one field, or may be jointly indicated by a plurality of fields. This is not limited in this application.

According to the foregoing design, more ranging information is provided, and a format of a ranging PDU can be accurately indicated, thereby further improving accuracy and reliability of the ranging exchange between the first node and the second node.

In embodiments of this application, a structure of the first preamble may be designed in a plurality of manners. The following describes two possible design manners.

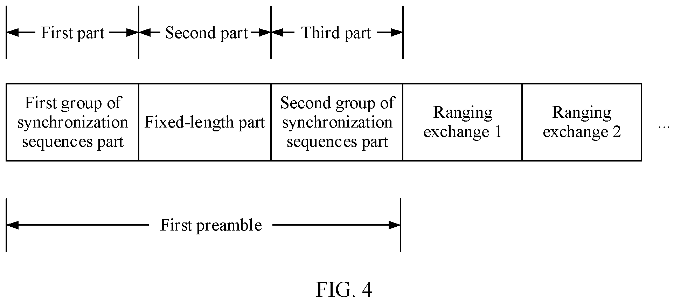

Manner 1: Refer to FIG. 4. The first preamble includes only a first part, a second part, and a third part.

For definitions of the first part and the second part, refer to the foregoing descriptions. The third part is a second group of synchronization sequences, and the first group of synchronization sequences is the same as the second group of synchronization sequences, for example, including five STS OFDM symbols and five FTS OFDM symbols.

During specific implementation, a location of the first part of the first preamble corresponds to a location of the first part of the legacy preamble. For a specific design of the first part of the first preamble, refer to a design of the first part of the legacy preamble. A location of the second part of the first preamble corresponds to a location of the second part of the legacy preamble. However, different from information indicated by the second part of the legacy preamble, the second part of the first preamble indicates the ranging information. A location of the third part of the first preamble corresponds to a location of the third part of the legacy preamble. For a specific design of the third part of the first preamble, refer to the design of the third part of the legacy preamble. The ranging frame is after the third part of the first preamble.

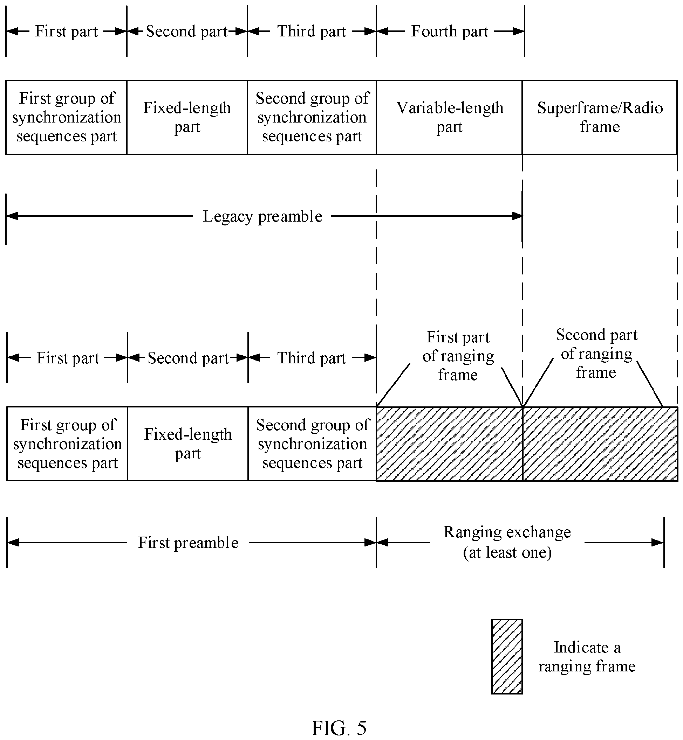

FIG. 5 is a comparison diagram of a first preamble and a legacy preamble. It can be seen from FIG. 5 that, in comparison with the legacy preamble shown in FIG. 2, a length of the first part of the first preamble is the same as a length of the first part of the legacy preamble; a length of the second part of the first preamble is the same as a length of the second part of the legacy preamble, and a same modulation manner is used; and a length of the third part of the first preamble is the same as a length of the third part of the legacy preamble. In this design, the first preamble and the legacy preamble have a similar structure, and therefore have good backward compatibility, so that the first preamble can still be partially parsed by a legacy device (a device supporting the legacy preamble). In particular, some fields indicating channel resource reservation duration can still be parsed by the legacy device.

For the legacy device, after receiving a fixed-length part in the legacy preamble, the legacy device may calculate, based on two fields: "a quantity of superframes included in current resource occupation (a fourth field)" and "a quantity of symbols in a variable-length part (a seventh field)" in the fixed-length part, total duration (starting from the legacy preamble to a last superframe) of current resource occupation. It is assumed that TXTIME is used to represent the total duration of the current resource (carrier channel) occupation, and TXTIME of the legacy device is calculated as follows:

$$TXTIME \;=\; T_{sync1} + \; T_{fix} + \; T_{sync2} \; + \; T_{var} \; + \; T_{SF}.$$

$T_{sync1}$, $T_{fix}$, $T_{sync2}$, $T_{var}$, $T_{SF}$ respectively represents duration of the four parts of the legacy preamble. $T_{sync1}$, $T_{fix}$, $T_{sync2}$ are all fixed values, and sequentially represent duration (20.83 $\mu$s) of 10 OFDM symbols without a CP, duration (14 $\times$ 2.539 $\mu$s) of 14 extended cyclic prefix CP-OFDM symbols, and duration (20.83 $\mu$s) of 10 OFDM symbols without a CP. $T_{var}$ represents duration of a variable-length part, and is calculated by multiplying a quantity of symbols indicated by "the quantity of symbols of the variable-length part (the seventh field)" of the fixed-length part by symbol duration (extended cyclic prefix CP OFDM symbol duration 2.539 $\mu$s). $T_{SF}$ indicates a quantity of superframes used to transmit the physical layer PDU after the preamble, and is obtained by multiplying a quantity of superframes indicated by "the quantity of superframes included in the current resource occupation (the fourth field)" by superframe duration (1 ms).

As shown in FIG. 5, in Manner 1, the ranging frame in at least one ranging exchange may be divided into two parts: a first part of the ranging frame and a second part of the ranging frame. A location of the first part of the ranging frame corresponds to a location of a fourth part of the legacy preamble, and a location of the second part of the ranging frame corresponds to a location of a superframe after the legacy preamble.

In this way, a method for calculating channel occupancy duration of the first node on the first channel may be the same as a method for calculating channel occupancy duration of the legacy device, that is:

$$TXTIME \;=\; T_{sync1} + \; T_{fix} + \; T_{sync2} \; + \; T_{var} \; + \; T_{SF}.$$

A difference lies in that, $T_{var}$ herein is the duration of the first part of the ranging frame, and $T_{SF}$ is the duration of the second part of the ranging frame. $T_{var}$ + $T_{SF}$ covers total duration of all ranging frames for ranging exchange. $T_{var}$ is duration of the ranging frame that occupies the variable-length part, and is calculated by multiplying the quantity of symbols indicated by "the quantity of symbols of the variable-length part (the seventh field)" of the fixed-length part by symbol duration (extended cyclic prefix CP OFDM symbol duration 2.539 $\mu$s).

Correspondingly, the duration of the at least one ranging exchange may be determined based on the length of the first part of the ranging frame and the length of the second part of the ranging frame, for example, a sum of the length of the first part of the ranging frame and the length of the second part of the ranging frame. $T_{var}$ and $T_{SF}$ jointly indicate the duration of the at least one ranging exchange. For example, when $T_{SF}$ is equal to 0, $T_{var}$ indicates only duration of the ranging exchange on the first channel. When duration of ranging exchange is long (exceeding maximum indication duration of $T_{var}$), $T_{var}$ + $T_{SF}$ indicates the duration of the ranging exchange on the first channel. In such a design manner, the legacy device can calculate, based on "the quantity of symbols of the variable-length part (the seventh field)" and "the quantity of superframes included in current resource occupation (the fourth field)" of the fixed-length part in the preamble, duration occupied by all ranging exchanges after the preamble.

Optionally, the duration of the at least one ranging exchange is indicated by a first field and a second field, the first field indicates the length of the first part of the ranging frame in the at least one ranging exchange, and the second field indicates the length of the second part of the ranging frame in the at least one ranging exchange. Specifically, for example, the first field indicates a quantity of symbols, and the second field indicates a quantity of superframes. In this design, the first field and the second field may directly reuse two fields defined in the legacy preamble (for example, the seventh field (indicating the quantity of symbols of the variable-length part) and the fourth field (indicating the quantity of superframes included in current resource occupation) in Table 1). In this way, the first preamble can still be partially parsed by the legacy device (a device supporting the legacy preamble). For example, for the legacy device, the quantity of symbols of the variable-length part is obtained by parsing the first field, and the quantity of superframes included in current resource occupation is obtained by parsing the second field. For a ranging device (for example, the first node or the second node in embodiments of this application), the length of the first part of the ranging frame is obtained by parsing the first field, and the length of the second part of the ranging frame is obtained by parsing the second field.

Optionally, the third part of the first preamble is further used for ranging. For example, after receiving the first preamble sent by the first node, the second node may perform ranging measurement on the third part of the first preamble. In this way, the second node can obtain more measurement quantities, thereby improving ranging accuracy.

Optionally, to distinguish between the first preamble and the legacy preamble, the second part of the first preamble may further carry version information indicating the first preamble. For example, the first information indicates a version of the first preamble, and the version of the first preamble is different from a version of a preamble (for example, the legacy preamble) used by the first node during communication. Generally, during communication, a device generally works on an initial operating channel (performance of the initial operating channel is better than performance of another channel). During ranging, ranging exchange may be performed on the another channel in a frequency hopping manner. Therefore, it may be further described herein that a version of the first preamble is different from a version of a preamble transmitted by the first node on an initial operating channel. It may be understood that the second channel described above may be the initial operating channel, or may be a non-initial operating channel (that is, the second channel is also a channel that the first node switches to after one or more times of frequency hopping starting from the initial operating channel). This is not limited in this application.

In addition to the duration of the at least one ranging exchange, for other information in the ranging information, for example, a ranging session identifier corresponding to the at least one ranging exchange, at least one symbol type of a ranging frame in the at least one ranging exchange, whether the ranging frame has a CP, a CP type, a ranging exchange mode, and a version of the first preamble, a field defined in the legacy preamble may also indicate the information. For example, Table 2 is a design example of fields in the second part of the first preamble, where meanings of fields in the second part of the legacy preamble are compared with meanings of fields in the second part of the first preamble.

**Table 2**

| Sequence number | Field meaning (second part of a legacy preamble) | Field meaning (second part of a first preamble) |
|---|---|---|
| 1 | 2 bits: version information, which is set to 0 | 2 bits: version information. When a value is set to 1, it indicates that current transmission is a ranging frame. When the value is set to 0, it indicates that current transmission is a superframe structure in a legacy preamble. Another value is reserved. |
| 2 | 48 bits: 48-bit data link layer ID of a G node. | 48 bits: It indicates 48-bit data link layer ID of a G node or a T node that sent this preamble. |
| 3 | 16 bits: superframe number. It indicates a superframe number of a last superframe that occupies a channel in a previous transmission. | 16 bits: superframe number or ranging session ID. On an initial channel, it indicates a superframe number of a last superframe that occupies a channel in a previous transmission. It indicates a ranging session ID in frequency hopping ranging (non-initial operating channel). On an initial operating channel before frequency hopping starts and after returning to the initial operating channel through frequency hopping, an indication indicating that the superframe number is still maintained. |
| 4 | 4 bits: quantity of superframes included in current resource occupation. A value of this field + 1 is a quantity of superframes included in this transmission. | 4 bits: It indicates a quantity of superframes, and a unit is 1 ms (duration of a single superframe). Superframe duration (the quantity of superframes $\times$ 1 ms) indicated by this field should cover exchange duration of a ranging frame. When the value is set to 0, no superframe is transmitted. For a legacy device, the quantity of superframes is obtained by parsing the field. For a ranging device (for example, a first node or a second node), duration of a second part of a ranging frame included in ranging exchange on channel during frequency hopping ranging is obtained by parsing the field. |

(continued)

| Sequence number | Field meaning (second part of a legacy preamble) | Field meaning (second part of a first preamble) |
|---|---|---|
| 5 | 11 bits: Quantity of information bits transmitted in a variable-length part in bytes. When a value of this field is 0, a variable-length part is not transmitted. | 4 bits: initial radio frame symbol configuration information.<br>When a normal cyclic prefix is used, 0 to 13 respectively indicate radio frame structures 0 to 13 in Table 2 of the SLB standard. When an extended cyclic prefix is used, 0 to 11 respectively indicate radio frame structures 0 to 11 in Table 3 of the SLB standard.<br>Other 7 bits: reserved |
| 6 | 2 bits: Modulation mode of a variable-length part. 00 indicates QPSK, 01 indicates 16-QAM, 10 indicates 64-QAM, and 11 indicates 256-QAM. | 2 bits: reserved |
| 7 | 8 bits: Quantity of symbols in a variable-length part. When a value of this field is 0, a variable-length part is not transmitted. | 8 bits:<br>For a legacy device, a quantity of symbols of a variable-length part is obtained by parsing this field. When a value is 0, it indicates that the quantity of symbols of the variable-length part is 0, that is, the variable-length part is not transmitted.<br>For a ranging device (for example, a first node or a second node), a quantity of symbols of a first part of a ranging frame included in ranging exchange on channel during frequency hopping ranging is obtained by parsing the field.<br>It should be noted that, in the legacy preamble, a symbol of the variable-length part fixedly uses an extended CP. If a symbol of the ranging frame uses an extended CP, a symbol length of the ranging frame is the same as a symbol length of an original variable-length part, and there is no problem that a quantity of symbols changes. If the symbol of the ranging frame uses a normal CP, a quantity of symbols (using a 20 MHz carrier as an example) needs to be compensated is: $N_{symbol} = 9Ts* 10*2*Nr/(64Ts)$. |
| 8 | | 2 bits: ranging exchange mode. 0 indicates that a ranging exchange mode is a two-way 2 message. 1 indicates that the ranging exchange mode is a two-way 3 message. Another value is reserved. |
| 9 | | 5 bits: It indicates a quantity of times of ranging exchange. When a value is set to 0, it indicates that there is no ranging frame after a first preamble, and the first preamble is used for ranging. |
| 10 | | 6 bits: a quantity of ranging frames in each ranging exchange, that is, a quantity of ranging radio frames continuously sent by a single side (for example, M and N described above). |
| 11 | | 3 bits: OFDM symbol type. It indicates an OFDM symbol type in a ranging frame in ranging exchange. When a value is 0, it indicates that a ranging frame of a G node uses a CSI-RS, and a ranging frame of a T node uses an SRS. When the value is 1, it indicates that ranging frames of the G node and the T node uses an FTS. When the value is 2, it indicates that the ranging frame of the T node uses an STS symbol. Another value is reserved. |
| 12 | | 1 bit: It indicates whether a ranging frame has a CP |
| 13 | | 1 bit: It indicates that a CP in a ranging frame is a normal CP or an extended CP |

(continued)

| Sequence number | Field meaning (second part of a legacy preamble) | Field meaning (second part of a first preamble) |
|---|---|---|
| 14 | | 4 bits: quantity of ranging frame symbols. It indicates a quantity of OFDM symbols (ranging symbols) included in each ranging frame. |
| | | 4 bits: frame type after a preamble. For example, values 1 to 3 indicate that the frame type of the signal frame sent after the preamble is a ranging frame, an RTS frame, or a CTS frame. Another value is reserved. |
| 15 | | Other 14 bits: reserved |

It may be understood that Table 2 is merely an example rather than a specific limitation, and a bit length and an occurrence sequence of each field may be adjusted.

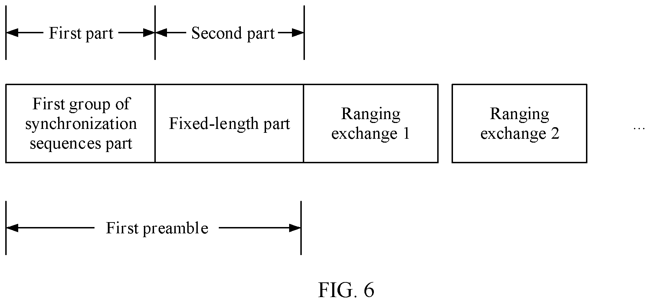

Manner 2: Refer to FIG. 6. The first preamble includes only a first part and a second part.

For definitions of the first part and the second part, refer to the foregoing descriptions.

In Manner 2, only a first group of synchronization sequences is reserved for the first preamble, and performance of the first preamble is sufficient to complete functions such as packet detection, AGC, timing synchronization, and/or frequency synchronization that are required by a ranging application. This is because, in addition to a preamble used for timing and frequency offset synchronization, the OFDM reference signals such as continuous CSI-RSs/SRSs/PRSs included in the ranging frame itself can also be used for precise estimation of carrier frequency offset (carrier frequency offset, CFO) and fine frequency synchronization.

During specific implementation, a location of the first part of the first preamble corresponds to a location of the first part of the legacy preamble. For a specific design of the first part of the first preamble, refer to a design of the first part of the legacy preamble. A location of the second part of the first preamble corresponds to a location of the second part of the legacy preamble. However, different from information indicated by the second part of the legacy preamble, the second part of the first preamble indicates the ranging information. The ranging frame is after the second part of the first preamble.

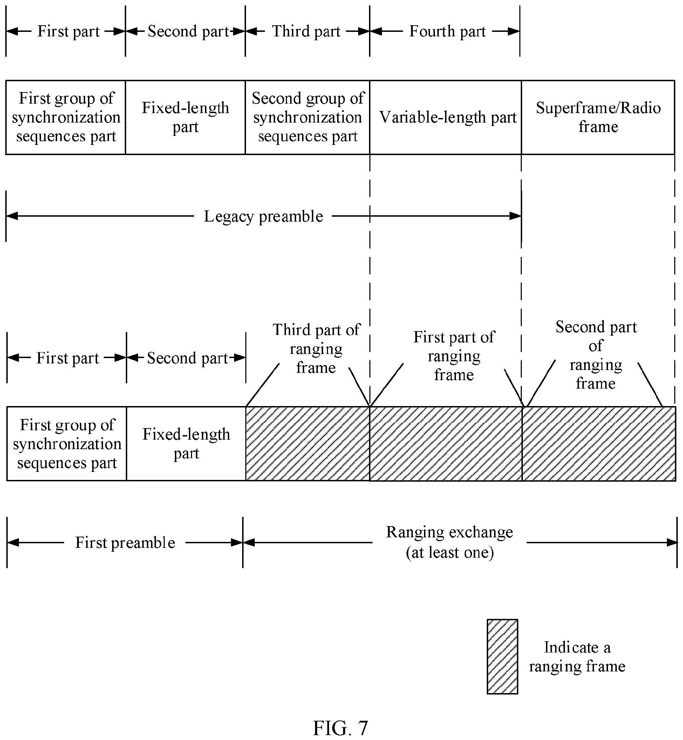

FIG. 7 is a comparison diagram of a first preamble and a legacy preamble. It can be seen from FIG. 7 that, in comparison with the legacy preamble shown in FIG. 2, a length of the first part of the first preamble is the same as a length of the first part of the legacy preamble; and a length of the second part of the first preamble is the same as a length of the second part of the legacy preamble, and a same modulation manner is used. In this design, preamble overheads can be further reduced.

Similarly, in Manner 2, the ranging frame in at least one ranging exchange may be divided into three parts: a first part of the ranging frame, a second part of the ranging frame, and a third part of the ranging frame. A location of the first part of the ranging frame corresponds to a location of a fourth part of the legacy preamble, a location of the second part of the ranging frame corresponds to a location of a superframe after the legacy preamble, and a location of the third part of the ranging frame corresponds to a location of a third part of the legacy preamble.

A method for calculating channel occupancy duration of the first node on the first channel may be the same as a method for calculating channel occupancy duration of the legacy device, that is:

$$TXTIME = T_{sync1} + T_{fix} + T_{sync2} + T_{var} + T_{SF}.$$

A difference lies in that, $T_{var}$ herein is duration of the first part of the ranging frame, $T_{SF}$ is duration of the second part of the ranging frame; and $T_{sync2}$ is duration of the third part of the ranging frame.

Correspondingly, the duration of the at least one ranging exchange may be determined based on a length of the first part of the ranging frame, a length of the second part of the ranging frame, and a length of the second part of the ranging frame, for example, a sum of the length of the first part of the ranging frame, the length of the second part of the ranging frame, and the length of the third part of the ranging frame. $T_{sync2}$, $T_{var}$ and $T_{SF}$ jointly indicate the duration of the at least one ranging exchange. For example, when $T_{var}$ and $T_{SF}$ are both equal to 0, $T_{sync2}$ indicates only duration of the ranging exchange on the first channel. When duration of ranging exchange is long (exceeding maximum indication duration of $T_{sync2}$), $T_{sync2}$, $T_{var}$, $T_{sync2}$, $T_{var}$, or $T_{SF}$ indicates the duration of the ranging exchange on the first channel. In such a design manner, the legacy device can calculate, based on "the quantity of symbols of the variable-length part (the seventh field)" and "the quantity of superframes included in current resource occupation (the fourth field)" of the fixed-length part in the preamble and a length of the second group of synchronization sequences, duration occupied by all ranging exchanges after the preamble.

Because a length of the third part of the ranging frame is the same as a length of the third part of the legacy preamble, that is, the length of the third part of the ranging frame is predefined, the first preamble may omit an indication of the length of the third part of the ranging frame, and only needs to indicate the length of the first part of the ranging frame and the length of the second part of the ranging frame. After receiving the first preamble, the receiving device (for example, the second node), automatically compensates the length of the third part of the ranging frame based on the length of the first part of the ranging frame and the length of the second part of the ranging frame, to obtain the duration of the at least one exchange.

For example, the duration of the at least one ranging exchange is indicated by a first field and a second field, the first field indicates the length of the first part of the ranging frame in the at least one ranging exchange, and the second field indicates the length of the second part of the ranging frame in the at least one ranging exchange. Specifically, for example, the first field indicates a quantity of symbols, and the second field indicates a quantity of superframes. In this design, the first field and the second field may directly reuse two fields defined in the legacy preamble (for example, the seventh field (indicating the quantity of symbols of the variable-length part) and the fourth field (indicating the quantity of superframes included in current resource occupation) in Table 1). In other words, for the legacy device, the quantity of symbols of the variable-length part is obtained by parsing the first field, and the quantity of superframes included in current resource occupation is obtained by parsing the second field. For a ranging device (for example, the first node or the second node), the length of the first part of the ranging frame is obtained by parsing the first field, and the length of the second part of the ranging frame is obtained by parsing the second field.

Optionally, the second part further includes second information, and the second information indicates that the first preamble includes only the first part and the second part. Alternatively, the second part does not include the second information, and it is stipulated in a protocol or agreed upon by the first node and the second node that the first preamble includes only the first part and the second part.

Similarly, in addition to the duration of the at least one ranging exchange, for other information in the ranging information, a field defined in the legacy preamble may also indicate the information. For example, Table 3 is a design example of fields in the second part of the first preamble, where meanings of fields in the second part of the legacy preamble are compared with meanings of fields in the second part of the first preamble.

**Table 3**

| Sequence number | Field meaning (second part of a legacy preamble) | Field meaning (second part of a first preamble) |
|---|---|---|
| 1 | 2 bits: version information, which is set to 0 | 2 bits: version information, which is set to 0 (the same as setting of a version information field of an original legacy preamble) |
| 2 | 48 bits: 48-bit data link layer ID of a G node. | 48 bits: 48-bit data link layer ID of a G node or a T node |
| 3 | 16 bits: superframe number. It indicates a superframe number of a last superframe that occupies a channel in a previous transmission. | 16 bits: superframe number or ranging session ID. On an initial channel, it indicates a superframe number of a last superframe that occupies a channel in a previous transmission. It indicates a ranging session ID in frequency hopping ranging (non-initial operating channel). On an initial operating channel before frequency hopping starts and after returning to the initial operating channel through frequency hopping, an indication indicating that the superframe number is still maintained. |

(continued)

| Sequence number | Field meaning (second part of a legacy preamble) | Field meaning (second part of a first preamble) |
|---|---|---|
| 4 | 4 bits: quantity of superframes included in current resource occupation. A value of this field + 1 is a quantity of superframes included in this transmission. | 4 bits: It indicates a quantity of superframes, and a unit is 1 ms (superframe). Superframe duration should cover exchange duration of a ranging frame. When the value is set to 0, no superframe is transmitted. For a legacy device, a quantity of superframes is obtained by parsing the field. For a ranging device (for example, a first node or a second node), a quantity of symbols of a second part of a ranging frame included in ranging exchange on channel during frequency hopping ranging is obtained by parsing the field. |
| 5 | 11 bits: Quantity of information bits transmitted in a variable-length part in bytes. When a value of this field is 0, a variable-length part is not transmitted. | 1 bit: It indicates whether a second group of synchronization sequences part exists. When a value is 0, it indicates that the second group of synchronization sequences part does not exist; otherwise, it indicates that the second group of synchronization sequences part exists (a case in which the second group of synchronization sequence part exists is a legacy preamble).

4 bits: initial radio frame symbol configuration information. When a normal cyclic prefix is used, 0 to 13 respectively indicate radio frame structures 0 to 13 in Table 2. When an extended cyclic prefix is used, 0 to 11 respectively indicate radio frame structures 0 to 11 in Table 3. Other 6 bits: reserved. |
| 6 | 2 bits: Modulation mode of a variable-length part. 00 indicates QPSK, 01 indicates 16QAM, 10 indicates 64QAM, and 11 indicates 256QAM. | 2 bits: reserved. |
| 7 | 8 bits: Quantity of symbols in a variable-length part. When a value of this field is 0, a variable-length part is not transmitted. | 8 bits: For a legacy device, a quantity of symbols of a variable-length part is obtained by parsing this field. When a value is 0, it indicates that the quantity of symbols of the variable-length part is 0, that is, the variable-length part is not transmitted. For a ranging device (for example, a first node or a second node), a quantity of a first part of ranging frames included in ranging exchange on channel during frequency hopping ranging is obtained by parsing the field.

It should be noted that, when a fifth field indicates that there is no second group of synchronization sequences, the duration of ranging exchange is calculated as follows: In addition to the duration of the first part of the ranging frame and the duration of the second part of the ranging frame, 10 pieces of duration without a CP symbol (that is, the duration of the third part of the ranging frame) need to be supplemented, and is converted into a quantity of variable-length symbols $N_{sp} = 20.83\ \mu s\ /2.539\ \mu s = 8$. |

(continued)

| Sequence number | Field meaning (second part of a legacy preamble) | Field meaning (second part of a first preamble) |
|---|---|---|
| | | It should be noted that, in the legacy preamble, a symbol of the variable-length part fixedly uses an extended CP. If a symbol of the ranging frame uses an extended CP, a symbol length of the ranging frame is the same as a symbol length of an original variable-length part, and there is no problem that a quantity of symbols changes. If a ranging symbol of the ranging frame uses a normal CP, a quantity of symbols (using a 20 MHz carrier as an example) needs to be compensated is: $N_{symbol}$ = 9Ts*10*2*Nr/(64Ts), where Nr represents a quantity of repetition times of ranging exchange, and Ts represents a sampling time interval. |
| 8 | | 2 bits: ranging exchange mode. 0 indicates that a ranging exchange mode is a two-way 2 message. 1 indicates that the ranging exchange mode is a two-way 3 message. Another value is reserved. |
| 9 | | 5 bits: It indicates a quantity of repetition times of ranging exchange. When a value is set to 0, it indicates there is no ranging frame after the preamble, and the preamble is used for ranging |
| 10 | | 6 bits: a quantity of ranging frames in each ranging exchange, that is, a quantity of ranging radio frames continuously sent by a single side. |
| 11 | | 3 bits: OFDM symbol type. It indicates an OFDM symbol type in a ranging frame in ranging exchange. When a value is 0, it indicates that a ranging frame of a G node uses a CSI-RS, and a ranging frame of a T node uses an SRS. When the value is 1, it indicates that ranging frames of the G node and the T node uses an FTS. When the value is 2, it indicates that the ranging frame of the T node uses an STS symbol. Another value is reserved. |
| 12 | | 1 bit: It indicates whether a ranging frame has a CP |
| 13 | | 1 bit: It indicates that a CP in a ranging frame is a normal CP or an extended CP |
| 14 | | 1 bit: It indicates whether a security sequence is scrambled. 0 indicates that an OFDM symbol does not use the security sequence; and 1 indicates that the OFDM symbol uses the security sequence. |

Optionally, to distinguish between the first preamble and the legacy preamble, when performing ranging negotiation on the initial operating channel, the first node and the second node may determine channels on which the first node and the second node subsequently perform ranging exchange, to determine that preambles transmitted on these channels (for example, the first channel) are all first preambles. In this way, the version information in the first preamble may not be distinguished from version information of the legacy preamble. For example, the second part further includes third information, the third information indicates a version of the first preamble, and the version of the first preamble is the same as a version of a preamble transmitted by the first node on an initial operating channel.

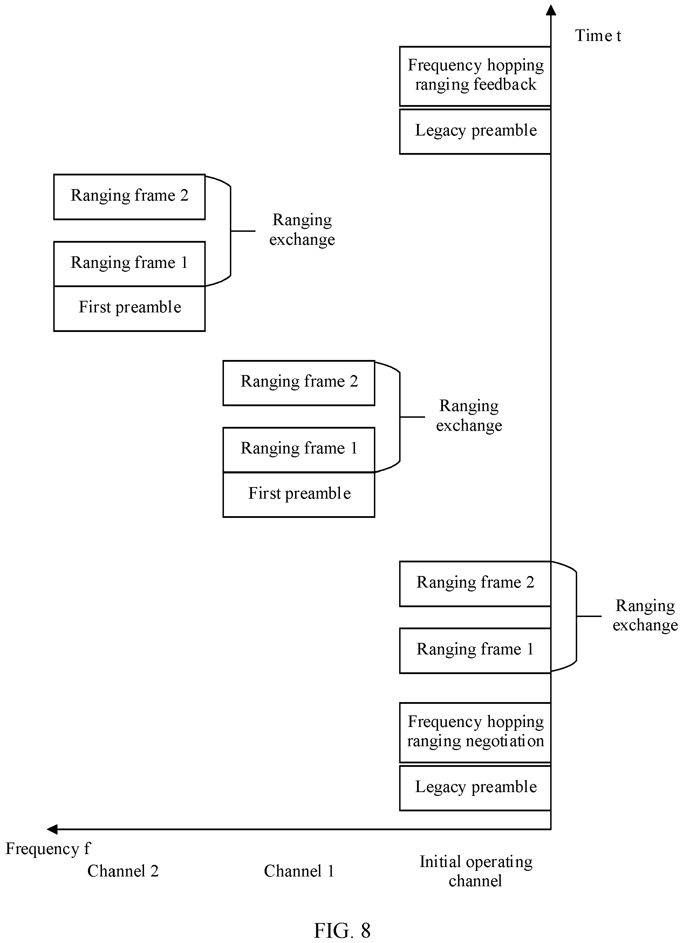

For example, FIG. 8 is a diagram of frequency hopping ranging exchange. A first node and a second node negotiate a frequency hopping pattern (pattern) and an indication of frequency hopping start time on an initial operating channel, and a method for calculating carrier channel staying duration in the frequency hopping pattern (pattern). In this way, the first node and the second node know that each other is to send a ranging frame on a carrier channel (such as a carrier channel 1 and a carrier channel 2) after frequency hopping, that is, know a channel and start time of sending the ranging frame. Therefore, after the frequency hopping start time, a received preamble is parsed based on a format (a format shown in Table 3) of the first preamble defined in embodiments of this application.

The first preamble in Manner 1 and the first preamble in Manner 2 are mainly different in the following aspects.

1. The version information of the first preamble in Manner 2 is the same as the version information of the legacy preamble, and the version information of the first preamble in Manner 1 is different from the version information of the legacy preamble.

2. One bit in the fifth field of the first preamble in Manner 2 indicates whether there is the second group of synchronization signal sequences, and the first preamble in Manner 1 does not have the bit.

3. In Manner 2, when the duration of ranging exchange is calculated, 10 pieces of duration without a CP symbol (that is, duration of the third part of the ranging frame) need to be compensated. In Manner 1, compensation is not required.

In the foregoing two manners, during the frequency hopping ranging, a field format of the second part in the original legacy preamble is reused to indicate the ranging information, so that the ranging information (for example, a frame structure of the ranging frame) can be indicated without adding new indication information overheads. In addition, the second part of the first preamble reserves "the quantity of symbols in the variable-length part (the seventh field)" and "the quantity of superframes included in current resource occupation (the fourth field)" of the second part of the legacy preamble, so that after receiving the first preamble, the legacy device can still obtain TXTIME through calculation by using the foregoing two fields. In this way, the legacy device sleeps based on the TXTIME (at least does not perform idle channel assessment within the TXTIME). Power consumption of a legacy device can be reduced.

It may be understood that, in actual application, only Manner 1 or only Manner 2 may be implemented, or a new design manner may be generated by combining Manner 1 and Manner 2. For example, in Manner 1, the version information of the first preamble may also be the same as the version information of the legacy preamble. During frequency hopping negotiation, the node determines which channels are used to send the first preamble.

It should be noted that the foregoing Manner 1 and Manner 2 are merely two possible examples, and there may be another design manner in actual application.

It should be further noted that, in the foregoing embodiment, an example in which a structure of the first preamble reuses a part of the preamble format shown in FIG. 1 is used. In actual application, the first preamble may alternatively reuse another preamble format. This is not limited in this application.

To better describe effect of the technical solutions in embodiments of this application, a group of simulated data is used as an example herein. A simulation test uses the first preamble in the foregoing Manner 2 as an example, that is, only one group of synchronization sequences is reserved.

Simulation assumption:

(1) An STS uses 32 points as a basic unit for packet arrival detection and coarse frequency offset estimation. A maximum of eight basic units are used for coarse frequency offset estimation.
(2) An FTS uses 64 points as a basic unit to perform precise frequency offset estimation. A maximum of four basic units are used (a first FTS is used as a CP).
(3) Channel model: TDL-A.
(4) Single carrier (fs = 30.72 MHz)
(5) CFO: 250 kHz (49 ppm @ 5.1 GHz).
(6) Power of an STS/an FTS is normalized.
(7) 10000 frames (preamble).

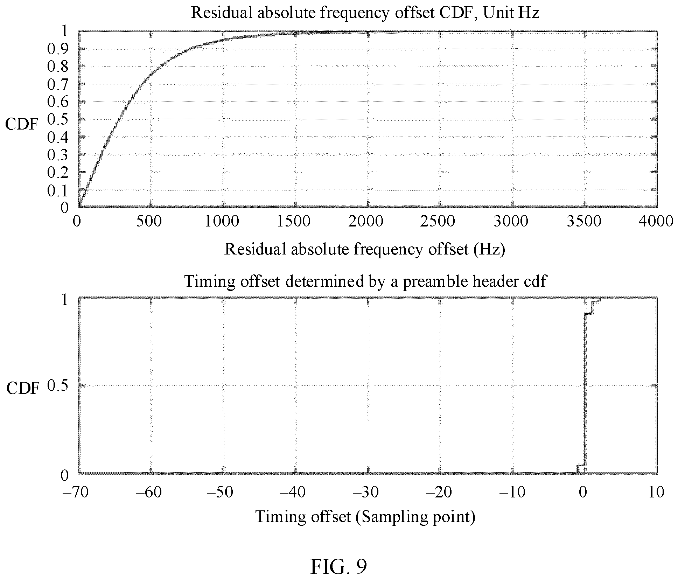

FIG. 9 is a diagram of a simulation result of timing and frequency synchronization of a first preamble. In the figure, CDF represents a cumulative distribution function (cumulative distribution function).

Simulation result: time and frequency synchronization performance under 0 dB signal-to-noise ratio.

(1) Symbol timing: Timing offset is in a range of (-1, +2) and a unit is a sampling point. This is because cross-correlation performance of fine timing is good, and the RMS delay of a channel model is also small.
(2) Maximum residual carrier frequency offset (CFO): 2 kHz (0.39 ppm @ 5.1 GHz).
(3) As accuracy of coarse frequency offset estimation is improved, no extra offset is caused by frequency offset.

The above simulation results show that when only the first part of the STS and the FTS (the first group of synchronization sequences) are retained, timing and frequency synchronization performance is good enough for the ranging function.

In a possible design, M is less than N, and the method further includes: The first node adjusts AGC of the first node based on at least one symbol in the second ranging frame. A synchronization sequence (for example, the first group of synchronization sequences) in the first preamble sent by the first node may be used by the second node to adjust the AGC. The first node also needs to adjust the AGC based on the received ranging frame from the second node.

In this design manner, duration of the second ranging frame sent by the second node is required to be greater than duration of the first ranging frame sent by the first node, so that the first node can adjust the AGC based on a redundant part of the second ranging frame, thereby further improving ranging accuracy and reliability.

In a possible design, the second node may further send a preamble, so that the first node adjusts the AGC. For example, the first node sends a first preamble, and the second node receives the first preamble. The first node sends M first ranging frames, and the second node receives the M first ranging frames. The second node sends a second preamble, and the first node receives the second preamble. The second node sends N second ranging frames, and the first node receives the N second ranging frames. For a design manner of the second preamble, refer to a design manner of the first preamble. Details are not described herein again.

Optionally, a first preamble of a G node may further indicate whether a T node sends a preamble. For example, if the first node is the G node, and the second node is the T node, a field in the second part of the first preamble sent by the first node indicates whether the T node sends the second preamble.

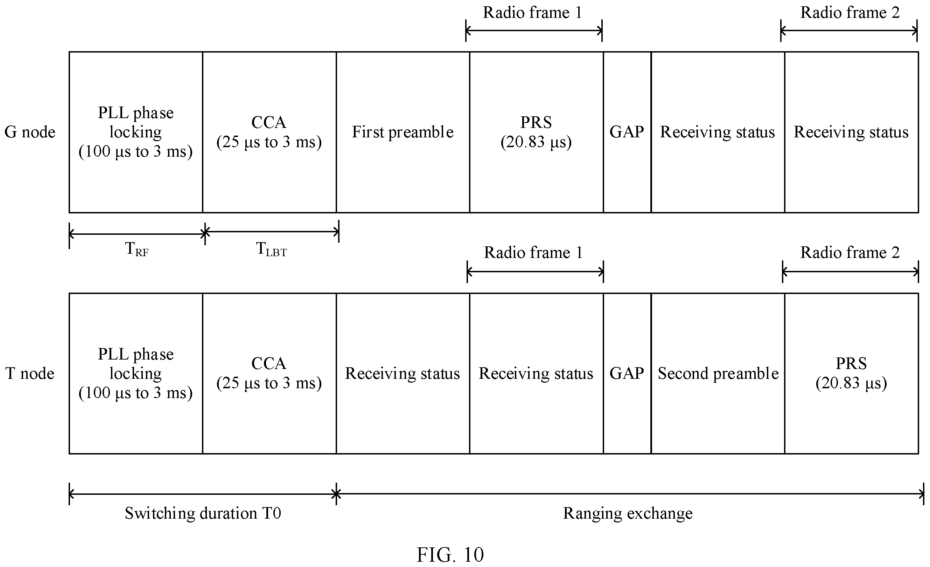

FIG. 10 is a diagram of possible ranging exchange. In a measurement exchange on a frequency hopping channel, a G node (for example, a first node) sends a first preamble and a first ranging frame (a radio frame 1 in FIG. 10), and then a T node (for example, a second node) sends a second preamble and a second ranging frame (a radio frame 2 in FIG. 10) after waiting for duration of a switching interval (GAP). Both the radio frame 1 and the radio frame 2 include a positioning reference signal (for example, a CSI-RS/SRS/FTS/STS/PRS).

In this way, the first node may adjust AGC based on the second preamble and the second ranging frame, to further ensure accuracy and reliability of ranging.

In the foregoing embodiment, an example in which the first node first sends the first preamble, and then the first node and the second node perform ranging exchange is used in a ranging exchange process. However, as described in Manner 1 above, the first preamble may also be used by the second node for ranging. In view of this, an embodiment of this application further provides a signal transmission method, to implement ranging based on a preamble.

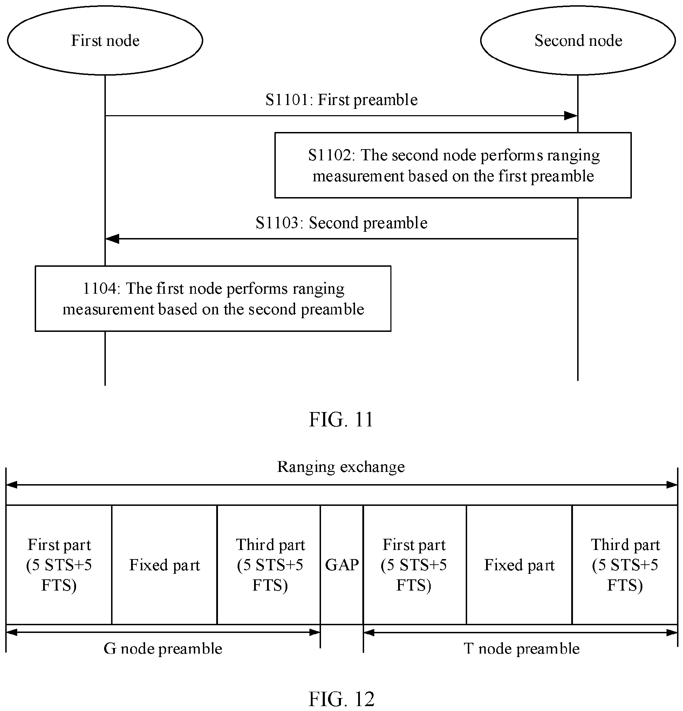

FIG. 11 is a flowchart of another ranging method according to an embodiment of this application. The method includes the following steps:

S1101: A first node sends a first preamble, and a second node receives the first preamble from the first node.

S1102: The second node performs ranging measurement based on the first preamble.

S1103: The second node sends a second preamble, and the first node receives the second preamble from the second node.

S1104: The first node performs ranging measurement based on the second preamble.

For specific formats of the first preamble and the second preamble, refer to the description in Manner 1. Details are not described herein again.

For example, the first preamble includes a first part, a second part, and a third part; the first part is a first group of synchronization sequences; the second part indicates ranging information in at least one ranging exchange, and a length of the second part is predefined; and the third part is a second group of synchronization sequences, and the first group of synchronization sequences is the same as the second group of synchronization sequences. The first group of synchronization sequences is used for initial synchronization, the second group of synchronization sequences is used for fine synchronization, and at least one symbol in the third part (the second group of synchronization sequences) is used for ranging.

Optionally, the second part indicates that in the ranging information in the at least one ranging exchange, a quantity of times of ranging exchange is 0, that is, there is no ranging frame after the first preamble. In this case, the ranging PDU is a preamble-only (preamble-only) ranging manner without a ranging frame. The preamble-only ranging manner is shorter and more compact than a "preamble + ranging exchange" manner. In some application scenarios where the ranging range is short, the preamble-only ranging manner can meet signal-to-noise ratio requirements, meet ranging precision, and have higher measurement efficiency.

During specific implementation, the first node is a G node, and the second node is a T node; or the first node is a T node, and the second node is a G node. This is not limited.

For example, FIG. 12 is a diagram of possible ranging exchange. A T node preamble and a G node preamble respectively include only three parts. The T node performs ranging measurement based on an STS and/or an FTS in a third part (a second group of synchronization sequences) of the G node preamble, and the G node performs ranging measurement based on an STS and/or an FTS in a third part of the T node preamble.

Based on the foregoing solution, preamble-based ranging between nodes can be implemented. In addition to ensuring basic functions such as packet detection, AGC, timing synchronization, and/or frequency synchronization between nodes, overheads of sending a ranging frame for ranging exchange are further reduced.

It may be understood that the implementations provided in embodiments of this application may be separately implemented, or may be implemented in combination with each other.

The foregoing describes the methods provided in embodiments of this application with reference to the accompanying drawings. The following describes apparatuses provided in embodiments of this application with reference to the accompanying drawings.

Based on a same technical concept, embodiments of this application provide a communication apparatus. The communication apparatus includes a module/unit/method configured to perform the method performed by the first node or the second node. The module/unit/method may be implemented by software, or may be implemented by hardware, or may be implemented by hardware by executing corresponding software.

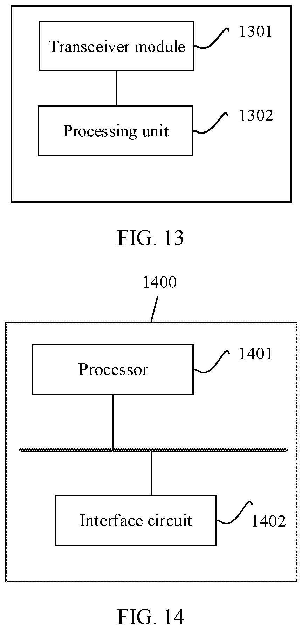

For example, refer to FIG. 13. The communication apparatus may include a transceiver module 1301 and a processing module 1302.

When the communication apparatus is configured to implement the method performed by the first node in FIG. 3, the transceiver module 1301 is configured to send a first preamble on a first channel. The transceiver module 1301 is further configured to communicate a signal frame on the first channel, where the first preamble indicates a type of the signal frame.

Optionally, the processing module 1302 is configured to generate the first preamble.

When the communication apparatus is configured to implement the method performed by the second node in FIG. 3, the transceiver module 1301 is configured to receive a first preamble on a first channel. The transceiver module 1301 is further configured to communicate a signal frame on the first channel, where the first preamble indicates a type of the signal frame.

Optionally, the processing module 1302 is configured to process the first preamble.

When the communication apparatus is configured to implement the method performed by the first node in FIG. 11, the transceiver module 1301 is configured to: send a first preamble, where the first preamble is used by the second node to perform ranging measurement; and receive a second preamble from the second node. The processing module 1302 is configured to perform ranging measurement based on the second preamble.

When the communication apparatus is configured to implement the method performed by the second node in FIG. 11, the transceiver module 1301 is configured to receive a first preamble from a first node; the processing module 1302 is configured to perform ranging measurement based on the first preamble; and the transceiver module 1301 is further configured to send a second preamble, where the second preamble is used by the first node to perform ranging measurement.

It should be understood that all related content of the steps in the foregoing method embodiments may be cited in function descriptions of the corresponding functional modules. Details are not described herein.

Refer to FIG. 14. Based on a same technical concept, an embodiment of this application further provides a processing apparatus 1400. The apparatus 1400 includes at least one processor 1401 and an interface circuit 1402. The interface circuit 1402 is configured to receive a signal from another apparatus other than the apparatus 1400, and transmit the signal to the processor 1401, or send a signal from the processor 1401 to another apparatus other than the apparatus. The processor 1401 is configured to implement, by using a logic circuit or executing code instructions, the method performed by the first processing apparatus in the foregoing method embodiments.

It should be understood that the processor mentioned in this embodiment of this application may be implemented by hardware or by software. When the processor is implemented by using the hardware, the processor may be a logic circuit, an integrated circuit, or the like. When the processor is implemented by using the software, the processor may be a general-purpose processor, and is implemented by reading software code stored in the memory.

For example, the processor may be a central processing unit (Central Processing Unit, CPU), or may be another general-purpose processor, a digital signal processor (Digital Signal Processor, DSP), an application-specific integrated circuit (Application Specific Integrated Circuit, ASIC), a field programmable gate array (Field Programmable Gate Array, FPGA), or another programmable logic device, discrete gate or transistor logic device, discrete hardware component, or the like. The general-purpose processor may be a microprocessor, or the processor may be any conventional processor or the like.

It should be understood that, the memory mentioned in embodiments of this application may be a volatile memory or a nonvolatile memory, or may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example and not limitation, RAMs in many forms may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that, when the processor is a general-purpose processor, a DSP, an ASIC, an FPGA or another programmable logic device, a discrete gate or a transistor logic device, or a discrete hardware component, the memory (storage module) may be integrated into the processor.

It should be noted that the memory described in this specification aims to include but is not limited to these memories and any memory of another proper type.

Based on a same technical concept, an embodiment of this application further provides a computer-readable storage medium, including a program or instructions. When the program or the instructions are run on a computer, the method performed by the first node or the second node in the foregoing method embodiments is performed.

Based on a same technical concept, an embodiment of this application further provides a computer program product including instructions. The computer program product stores the instructions. When the instructions are run on a computer, the method performed by the first node or the second node in the foregoing method embodiments is performed.

Based on a same technical concept, embodiments of this application further provide a signal transmission system, including the first node and the second node described above.

Based on a same technical concept, embodiments of this application further provide a terminal, including the first node and/or the second node described above. The terminal device may be a vehicle, an uncrewed aerial vehicle, a helicopter, an airplane, a ship, an intelligent transportation device, a smart home device, or the like. A specific form of the terminal device is not limited in embodiments of this application.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the protection scope of this application. This application is intended to cover these modifications and variations of this application provided that they fall within the scope of protection defined by the following claims and their equivalent technologies.

In this application, at least one means one or more, and a plurality of means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects. "Including at least one of A, B, and C" may represent: including A; including B; including C; including A and B; including A and C; including B and C; and including A, B, and C.

## Claims

1. A signal transmission method, comprising:

   sending, by a first node, a first preamble on a first channel; and
   transmitting, by the first node, a signal frame on the first channel, wherein
   the first preamble indicates a type of the signal frame.

2. The method according to claim 1, wherein the type of the signal frame is a ranging frame;

the transmitting, by the first node, a signal frame on the first channel comprises:

performing, by the first node, at least one ranging exchange with a second node on the first channel, wherein each of the at least one ranging exchange comprises: sending, by the first node, M first ranging frames and receiving N second ranging frames from the second node, and both M and N are positive integers; and
the first preamble indicates ranging information in the at least one ranging exchange, and the ranging information in the at least one ranging exchange comprises the type of the signal frame.

3. The method according to claim 2, wherein before the sending, by a first node, a first preamble on a first channel, the method further comprises:

sending, by the first node, information on a second channel, wherein
the first channel and the second channel correspond to different frequencies.

4. The method according to claim 2 or 3, wherein the first preamble comprises a first part and a second part;

the first part is a first group of synchronization sequences; and
the second part indicates the ranging information in the at least one ranging exchange, and a length of the second part is predefined.

5. The method according to claim 4, wherein the ranging information in the at least one ranging exchange further comprises one or more of the following:

duration of the at least one ranging exchange;
a ranging session identifier corresponding to the at least one ranging exchange;
at least one symbol type of a ranging frame in the at least one ranging exchange, wherein the at least one symbol type comprises one or more of a channel state information reference signal CSI-RS, a sounding reference signal SRS, a first training signal FTS, a second training signal STS, and/or a positioning reference signal PRS;
the ranging frame in the at least one ranging exchange has a cyclic prefix CP or does not have a CP;
a CP type of the ranging frame in the at least one ranging exchange is a normal CP or an extended CP;
a ranging exchange mode corresponding to the at least one ranging exchange, wherein the ranging exchange mode indicates values of M and N in each ranging exchange in the at least one ranging exchange, the M first ranging frames are consecutive ranging frames, and the N second ranging frames are consecutive ranging frames;
a quantity of times of the at least one ranging exchange;
whether the at least one symbol type of the ranging frame in the at least one ranging exchange is scrambled by using a physical layer security sequence;
whether the at least one ranging exchange is in a multi-user mode;
a quantity of a plurality of users when the at least one ranging exchange is in the multi-user mode;
an address or a number of a group comprising the plurality of users when the at least one ranging exchange is in the multi-user mode; and
a quantity of orthogonal frequency division multiplexing OFDM symbols comprised in each ranging frame in the at least one ranging exchange.

6. The method according to claim 4 or 5, wherein the first preamble further comprises a third part, the third part is a second group of synchronization sequences, and the first group of synchronization sequences is the same as the second group of synchronization sequences.

7. The method according to claim 6, wherein the duration of the at least one ranging exchange is indicated by a first field and a second field, the first field indicates a length of a first part of the ranging frame in the at least one ranging exchange, and the second field indicates a length of a second part of the ranging frame in the at least one ranging exchange; and
the first field indicates a quantity of symbols, and the second field indicates a quantity of superframes.

8. The method according to claim 7, wherein the duration of the at least one ranging exchange is a sum of the length of the first part of the ranging frame and the length of the second part of the ranging frame.

9. The method according to any one of claims 6 to 8, wherein the second part further comprises:

first information, wherein the first information indicates a version of the first preamble, and the version of the first preamble is different from a version of a preamble transmitted by the first node on an initial operating channel.

10. The method according to any one of claims 6 to 9, wherein the third part of the first preamble is used for ranging.

11. The method according to claim 4 or 5, wherein the first preamble comprises only the first part and the second part.

12. The method according to claim 11, wherein the second part further comprises second information, and the second information indicates that the first preamble comprises only the first part and the second part.

13. The method according to claim 11 or 12, wherein duration of the at least one ranging exchange is indicated by a first field and a second field, the first field indicates a length of a first part of the ranging frame in the at least one ranging exchange, the second field indicates a length of a second part of the ranging frame in the at least one ranging exchange, the at least one ranging exchange further comprises a third part of the ranging frame, and a length of the third part of the ranging frame is a preset length; and
the first field indicates a quantity of symbols, and the second field indicates a quantity of superframes.

14. The method according to claim 13, wherein the duration of the at least one ranging exchange is a sum of the length of the third part of the ranging frame, the length of the first part of the ranging frame, and the length of the second part of the ranging frame.

15. The method according to any one of claims 11 to 14, wherein the second part further comprises third information, the third information indicates a version of the first preamble, and the version of the first preamble is the same as a version of a preamble transmitted by the first node on an initial operating channel.

16. The method according to any one of claims 2 to 15, wherein M is less than N; and
the method further comprises:
adjusting, by the first node, automatic gain control AGC based on at least one symbol in the second ranging frame.

17. A signal transmission method, comprising:

sending, by a first node, a first preamble, wherein the first preamble is used by a second node to perform ranging measurement; and
receiving, by the first node, a second preamble from the second node, and performing ranging measurement based on the second preamble.

18. The method according to claim 17, wherein the first preamble comprises a first part, a second part, and a third part;

the first part is a first group of synchronization sequences;
the second part indicates ranging information in at least one ranging exchange, and a length of the second part is predefined; and
the third part is a second group of synchronization sequences, the first group of synchronization sequences is the same as the second group of synchronization sequences, and at least one symbol in the third part is used for ranging.

19. A signal transmission method, comprising:

receiving, by a second node, a first preamble on a first channel; and
transmitting, by the second node, a signal frame on the first channel, wherein
the first preamble indicates a type of the signal frame.

20. A signal transmission method, comprising:

receiving, by a second node, a first preamble from a first node, and performing ranging measurement based on the first preamble; and
sending, by the second node, a second preamble, wherein the second preamble is used by the first node to perform ranging measurement.

21. A communication apparatus, comprising:

   a transceiver module, configured to send a first preamble on a first channel; and
   the transceiver module is further configured to communicate a signal frame on the first channel, wherein
   the first preamble indicates a type of the signal frame.

22. A communication apparatus, comprising:

   a transceiver module, configured to: send a first preamble, wherein the first preamble is used by a second node to perform ranging measurement; and receive a second preamble from the second node; and
   a processing module, configured to perform ranging measurement based on the second preamble.

23. A communication apparatus, comprising:

   a transceiver module, configured to receive a first preamble on a first channel; and
   the transceiver module is further configured to communicate a signal frame on the first channel, wherein
   the first preamble indicates a type of the signal frame.

24. A communication apparatus, comprising:

   a transceiver module, configured to receive a first preamble from a first node; and
   a processing module, configured to perform ranging measurement based on the first preamble; and
   the transceiver module is further configured to send a second preamble, wherein the second preamble is used by the first node to perform ranging measurement.

25. A communication apparatus, comprising at least one processor and an interface circuit, wherein the interface circuit is configured to receive a signal from another apparatus other than the apparatus, and transmit the signal to the processor, or send a signal from the processor to another apparatus other than the apparatus, and the processor is configured to implement, by using a logic circuit or executing code instructions, the method according to any one of claims 1 to 16, or configured to implement the method according to any one of claims 17 and 18, or configured to implement the method according to claim 19, or configured to implement the method according to claim 20.

26. A computer-readable storage medium, wherein the readable storage medium is configured to store instructions, and when the instructions are executed, the method according to any one of claims 1 to 16 is implemented, or the method according to any one of claims 17 and 18 is implemented, or the method according to claim 19 is implemented, or the method according to claim 20 is implemented.

27. A computer program product, wherein the computer program product stores instructions, and when the instructions are run on a computer, the computer is enabled to perform the method according to any one of claims 1 to 16, or perform the method according to any one of claims 17 and 18, or perform the method according to claim 19, or perform the method according to claim 20.

28. A signal transmission system, comprising a first node and a second node, wherein

   the first node is configured to perform the method according to any one of claims 1 to 16, and the second node is configured to perform the method according to claim 19; or
   the first node is configured to perform the method according to any one of claims 17 and 18, and the second node is configured to perform the method according to claim 20.

29. A terminal, comprising the communication apparatus according to any one of claims 21 to 25.

FIG. 1

| First group of synchronization sequences part | Fixed-length part | Second group of synchronization sequences part | Variable-length part | Superframe/Radio frame |
|---|---|---|---|---|

FIG. 2

FIG. 3

|←— First part —→|←— Second part —→|←— Third part —→|

| First group of synchronization sequences part | Fixed-length part | Second group of synchronization sequences part | Ranging exchange 1 | Ranging exchange 2 | ... |
|---|---|---|---|---|---|

|←———————————— First preamble ————————————→|

FIG. 4

|←— First part —→|←Second part→|←— Third part —→|←— Fourth part —→|

| First group of synchronization sequences part | Fixed-length part | Second group of synchronization sequences part | Variable-length part | Superframe/Radio frame |
|---|---|---|---|---|

←————————————————— Legacy preamble —————————————————→

|←— First part —→|←Second part→|←— Third part —→|

First part of ranging frame

Second part of ranging frame

| First group of synchronization sequences part | Fixed-length part | Second group of synchronization sequences part | | |
|---|---|---|---|---|

←——————————— First preamble ———————————→|←——— Ranging exchange (at least one) ———→|

Indicate a ranging frame

FIG. 5

|←———— First part ————→|←——— Second part ——→|

| First group of synchronization sequences part | Fixed-length part | Ranging exchange 1 | | Ranging exchange 2 | ... |

|←———————— First preamble ————————→|

FIG. 6

| ← First part → | ← Second part → | ← Third part → | ← Fourth part → |
|---|---|---|---|

| First group of synchronization sequences part | Fixed-length part | Second group of synchronization sequences part | Variable-length part | Superframe/Radio frame |
|---|---|---|---|---|

← ——————————— Legacy preamble ——————————— →

| ← First part → | ← Second part → | Third part of ranging frame | First part of ranging frame | Second part of ranging frame |
|---|---|---|---|---|

| First group of synchronization sequences part | Fixed-length part | | | |
|---|---|---|---|---|

← ——— First preamble ——— → ← ——————— Ranging exchange (at least one) ——————— →

Indicate a ranging frame

FIG. 7

FIG. 8

Residual absolute frequency offset CDF, Unit Hz

FIG. 9

EP 4 538 740 A1

|  | | | | Radio frame 1 | | | Radio frame 2 |
|---|---|---|---|---|---|---|---|
| G node | PLL phase locking (100 μs to 3 ms) | CCA (25 μs to 3 ms) | First preamble | PRS (20.83 μs) | GAP | Receiving status | Receiving status |

$T_{RF}$    $T_{LBT}$

|  | | | | Radio frame 1 | | | Radio frame 2 |
|---|---|---|---|---|---|---|---|
| T node | PLL phase locking (100 μs to 3 ms) | CCA (25 μs to 3 ms) | Receiving status | Receiving status | GAP | Second preamble | PRS (20.83 μs) |

Switching duration T0           Ranging exchange

FIG. 10

S1101: First preamble

S1102: The second node performs ranging measurement based on the first preamble

S1103: Second preamble

1104: The first node performs ranging measurement based on the second preamble

First node

Second node

FIG. 11

Ranging exchange

| First part (5 STS+5 FTS) | Fixed part | Third part (5 STS+5 FTS) | GAP | First part (5 STS+5 FTS) | Fixed part | Third part (5 STS+5 FTS) |
|---|---|---|---|---|---|---|

G node preamble

T node preamble

FIG. 12

FIG. 13

1400

FIG. 14

<div align="center">**INTERNATIONAL SEARCH REPORT**</div>

| | International application No. |
| --- | --- |
| | **PCT/CN2022/107442** |

| **A.** | **CLASSIFICATION OF SUBJECT MATTER** |
| --- | --- |
| | G01S 11/00(2006.01)i |

According to International Patent Classification (IPC) or to both national classification and IPC

| **B.** | **FIELDS SEARCHED** |
| --- | --- |

Minimum documentation searched (classification system followed by classification symbols)

G01S H04W

Documentation searched other than minimum documentation to the extent that such documents are included in the fields searched

Electronic data base consulted during the international search (name of data base and, where practicable, search terms used)

CNKI, CNPAT, WPI, EPODOC: 前导, 测距, 指示, 帧, 类型, preamble, ranging, request to send, RTS, clear to send, CTS, indicate, CSI-RS, SRS, FTS, STS, PRS, frame, type

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| X | CN 113543142 A (VIVO COMMUNICATION TECHNOLOGY CO., LTD.) 22 October 2021 (2021-10-22) <br> description, paragraphs 0033-0036, 0062-0064 and 0219-0233 | 1, 19, 21, 23, 25-29 |
| X | CN 111796260 A (VIVO COMMUNICATION TECHNOLOGY CO., LTD.) 20 October 2020 (2020-10-20) <br> description, paragraphs 0041-0059 and 0342-0365 | 17, 20, 22, 24-29 |
| A | US 2015241551 A1 (UBIQOMM, LLC) 27 August 2015 (2015-08-27) <br> entire document | 1-29 |
| A | US 2018077725 A1 (QUALCOMM INCORPORATED) 15 March 2018 (2018-03-15) <br> entire document | 1-29 |
| A | US 2020003890 A1 (APPLE INC.) 02 January 2020 (2020-01-02) <br> entire document | 1-29 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 December 2022** | **22 December 2022** |

| Name and mailing address of the ISA/CN | Authorized officer |
| --- | --- |
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/107442**

| Patent document cited in search report | | | Publication date (day/month/year) | Patent family member(s) | | | Publication date (day/month/year) |
|---|---|---|---|---|---|---|---|
| CN | 113543142 | A | 22 October 2021 | WO | 2021213334 | A1 | 28 October 2021 |
| CN | 111796260 | A | 20 October 2020 | WO | 2021027515 | A1 | 18 February 2021 |
| | | | | KR | 20220038133 | A | 25 March 2022 |
| | | | | US | 2022163647 | A1 | 26 May 2022 |
| | | | | EP | 4016125 | A1 | 22 June 2022 |
| US | 2015241551 | A1 | 27 August 2015 | WO | 2015130731 | A1 | 03 September 2015 |
| | | | | US | 2016054429 | A1 | 25 February 2016 |
| US | 2018077725 | A1 | 15 March 2018 | WO | 2018052634 | A1 | 22 March 2018 |
| | | | | EP | 3513614 | A1 | 24 July 2019 |
| | | | | CN | 109691218 | A | 26 April 2019 |
| US | 2020003890 | A1 | 02 January 2020 | CN | 110662263 | A | 07 January 2020 |

Form PCT/ISA/210 (patent family annex) (January 2015)